# EUROPEAN PATENT SPECIFICATION

(11) **EP 2 932 766 B1**
(45) Date of publication and mention of the grant of the patent: **03.08.2016**
(21) Application number: 13814744.2
(22) Date of filing: 11.12.2013
(51) Int. Cl.: H04W 74/00, H04W 48/08

(54) **SYSTEM AND METHOD FOR IMPROVED COMMUNICATION ON A WIRELESS NETWORK**
SYSTEM UND VERFAHREN FÜR VERBESSERTE KOMMUNIKATION IN EINEM DRAHTLOSEN NETZWERK
SYSTÈME ET PROCÉDÉ PERMETTANT D'AMÉLIORER LA COMMUNICATION SUR UN RÉSEAU SANS FIL

(30) Priority: 12.12.2012 US 201261736417 P; 15.03.2013 US 201361798861 P; 10.12.2013 US 201314102492
(43) Date of publication of application: 21.10.2015
(73) Proprietor: Qualcomm Incorporated, San Diego, CA 92121-1714 (US)
(72) Inventor: JAFARIAN, Amin, San Diego, California 92121-1714 (US); MERLIN, Simone, San Diego, California 92121-1714 (US)
(74) Representative: Wegner, Hans
(86) International application number: PCT/US2013/074424
(87) International publication number: WO 2014/093502

(56) References cited:
- WO-A1-2012/139075
- Ghosh Chittabrata: "Restricted access window signaling for uplink channel acces", , 1 July 2012 (2012-07-01), pages 1-13, XP55049761, Retrieved from the Internet: URL:https://mentor.ieee.org [retrieved on 2013-01-15]
- CHITTABRATA GHOSH (NOKIA): "Group Synchronized DCF ; 11-12-0329-01-00ah-group-synchronized-dcf" , IEEE SA MENTOR; 11-12-0329-01-00AH-GROUP-SYNCHRONIZED-DCF, IEEE-SA MENTOR, PISCATAWAY, NJ USA, vol. 802.11ah, no. 1, 13 March 2012 (2012-03-13), pages 1-13, XP068038643, [retrieved on 2012-03-13]

## Description

### BACKGROUND

### Field

The present application relates generally to wireless communications, and more specifically to systems, methods, and devices for saving power using restricted access windows.

### Background

In many telecommunication systems, communications networks are used to exchange messages among several interacting spatially-separated devices. Networks may be classified according to geographic scope, which could be, for example, a metropolitan area, a local area, or a personal area. Such networks would be designated respectively as a wide area network (WAN), metropolitan area network (MAN), local area network (LAN), or personal area network (PAN). Networks also differ according to the switching/routing technique used to interconnect the various network nodes and devices (e.g. circuit switching vs. packet switching), the type of physical media employed for transmission (e.g. wired vs. wireless), and the set of communication protocols used (e.g. Internet protocol suite, SONET (Synchronous Optical Networking), Ethernet, etc.).

Wireless networks are often preferred when the network elements are mobile and thus have dynamic connectivity needs, or if the network architecture is formed in an ad hoc, rather than fixed, topology. Wireless networks employ intangible physical media in an unguided propagation mode using electromagnetic waves in the radio, microwave, infra-red, optical, etc. frequency bands. Wireless networks advantageously facilitate user mobility and rapid field deployment when compared to fixed wired networks.

The devices in a wireless network may transmit/receive information between each other. The information may comprise packets, which in some aspects may be referred to as data units. The packets may include overhead information (e.g., header information, packet properties, etc.) that helps in routing the packet through the network, identifying the data in the packet, processing the packet, etc., as well as data, for example user data, multimedia content, etc. as might be carried in a payload of the packet.

Document Ghosh et al., "Restricted Access Window Signaling for Uplink Channel Access", IEEE 802.11-12/0843ro, XP055049761, https://mentor.ieee.org, July 2012 proposes to add a RAW Parameter Set information element in (short) Beacon frame for restricted access window (RAW).

### SUMMARY

The invention is defined in the independent claims. Various implementations of systems, methods and devices within the scope of the appended claims each have several aspects, no single one of which is solely responsible for the desirable attributes described herein. Without limiting the scope of the appended claims, some prominent features are described herein. After considering this discussion, and particularly after reading the section entitled "Detailed Description" one will understand how the features of various implementations allow sleep time for an access point.

One aspect of the disclosure provides a method of wireless communication. The method includes generating, by an apparatus, a message identifying a time period during which the apparatus is to communicate data with one or more wireless devices, the message further comprising an indicator indicating a wireless communication flow direction during the time period; and transmitting, by an apparatus, the generated message.

Another aspect disclosed is an apparatus. The apparatus includes a processing system configured to generate a message identifying a time period during which the apparatus is to communicate data with one or more wireless devices, the message further comprising an indicator indicating a wireless communication flow direction during the time period, and a transmitter configured to transmit the generated message.

Another aspect disclosed is an access point. The access point includes an antenna, a processing system configured to generate a message identifying a time period during which the access point is to communicate data with one or more wireless devices, the message further comprising an indicator indicating a wireless communication flow direction during the time period; and a transmitter configured to transmit the generated message using the antenna.

Another aspect disclosed is an apparatus. The apparatus includes means for generating a message identifying a time period during which the apparatus is to communicate data with one or more wireless devices, the message further comprising an indicator indicating a wireless communication flow direction during the time period; and means for transmitting the generated message.

Another aspect disclosed is a computer program product. The computer program product includes a computer readable storage device encoded thereon with instructions that when executed cause an apparatus to perform a method of wireless communication, said method including generating a message identifying a time period during which the apparatus is to communicate data with one or more wireless devices, the message further comprising an indicator indicating a wireless communication flow direction during the time period; and transmitting the generated message.

Another aspect of the disclosure provides a method of wireless communication The method of wireless communication includes receiving, by an apparatus, a message identifying a time period during which a first device communicates data with one or more second devices, the message further comprising an indicator indicating a wireless communication flow direction during the time period; and communicating data, by an apparatus, with the first device based on the wireless communication flow direction indicator.

Another aspect disclosed is an apparatus. The apparatus includes a receiver configured to receive a message identifying a time period during which a first device communicates data with one or more second devices, the message further comprising an indicator indicating a wireless communication flow direction during the time period; and a processing system configured to communicate data with the first device based on the wireless communication flow direction indicator.

Another aspect disclosed is a station. The station includes an antenna; a receiver configured to receive a message using the antenna and identifying a time period during which a first device communicates data with one or more second devices, the message further comprising an indicator indicating a wireless communication flow direction during the time period; and a processing system configured to communicate data with the first device based on the wireless communication flow direction indicator.

Another aspect disclosed is an apparatus. The apparatus includes means for receiving a message identifying a time period during which a first device communicates data with one or more second devices, the message further comprising an indicator indicating a wireless communication flow direction during the time period; and means for communicating data with the first device based on the wireless communication flow direction indicator.

Another aspect disclosed is a computer program product. The computer program product comprising a computer readable storage device encoded thereon with instructions that when executed cause an apparatus to perform a method of wireless communication, said method including receiving a message identifying a time period during which a first device communicates data with one or more second devices, the message further comprising an indicator indicating a wireless communication flow direction during the time period; and communicating data with the first device based on the wireless communication flow direction indicator.

Another aspect of the disclosure provides a method of wireless communication The method of wireless communication includes generating, by an apparatus, a message comprising an indicator indicating whether one or more devices that are not associated with an apparatus are permitted to communicate with the apparatus during a time period defined by the message; and transmitting, by an apparatus, the generated message.

Another aspect disclosed is an apparatus. The apparatus includes a processing system configured to generate a message indicating whether one or more devices that are not associated with the apparatus are permitted to communicate with the apparatus during a time period defined by the message; and a transmitter configured to transmit the generated message.

Another aspect disclosed is an access point. The access point includes an antenna; a processing system configured to generate a message indicating whether one or more devices that are not associated with the access point are permitted to communicate with the access point during a time period defined by the message; and a transmitter configured to transmit the generated message using the antenna.

Another aspect disclosed is an apparatus. The apparatus includes means for generating a message indicating whether one or more devices that are not associated with the apparatus are permitted to communicate with the apparatus during a time period defined by the message; and means for transmitting the generated message.

Another aspect disclosed is a computer program product. The computer program product includes a computer readable storage device encoded thereon with instructions that when executed cause an apparatus to perform a method of wireless communication, said method includes generating a message indicating whether one or more devices that are not associated with an apparatus are permitted to communicate with the apparatus during a time period defined by the message; and transmitting the generated message.

Another aspect of the disclosure provides a method of wireless communication The method includes receiving, by an apparatus, a message indicating whether devices that are not associated with an apparatus are permitted to communicate with the apparatus during a time period defined by the message; and selectively transmitting, by an apparatus, a message to the apparatus based on the indication.

Another aspect disclosed is an apparatus. The apparatus includes a receiver configured to receive a message indicating whether devices that are not associated with a second apparatus are permitted to communicate with the second apparatus during a time period defined by the message; and a transmitter configured to selectively transmit a message to the second apparatus based on the indication.

Another aspect disclosed is a station. The station includes an antenna; a receiver configured to receive a message using the antenna and indicating whether devices that are not associated with an apparatus are permitted to communicate with the apparatus during a time period defined by the message; and a transmitter configured to selectively transmit a message to the apparatus based on the indication.

Another aspect disclosed is an apparatus. The apparatus includes means for receiving a message indicating whether devices that are not associated with a second apparatus are permitted to communicate with the second apparatus during a time period defined by the message; and means for selectively transmitting a message to the second apparatus based on the indication.

Another aspect disclosed is a computer program product. The computer program product includes a computer readable storage device encoded thereon with instructions that when executed cause an apparatus to perform a method of wireless communication, said method includes receiving a message indicating whether devices that are not associated with a apparatus are permitted to communicate with the apparatus during a time period defined by the message; and selectively transmitting a message to the apparatus based on the indication.

Another aspect of the disclosure provides a method of wireless communication. The method includes generating, by an apparatus, a message indicating an expiration time of a window during which one or more identified devices are permitted to communicate with an apparatus, wherein the expiration time is indicated based on a number of beacon intervals; and transmitting, by an apparatus, the generated message.

Another aspect disclosed is an apparatus. The apparatus includes a processing system configured to generate a message indicating an expiration time of a window during which one or more identified devices are permitted to communicate with the apparatus, wherein the expiration time is indicated based on a number of beacon intervals; and a transmitter configured to transmit the generated message.

Another aspect disclosed is an access point. The access point includes an antenna; a processing system configured to generate a message indicating an expiration time of a window during which one or more identified devices are permitted to communicate with the access point, wherein the expiration time is indicated based on a number of beacon intervals; and a transmitter configured to transmit the generated message using the antenna.

Another aspect disclosed is an apparatus. The apparatus includes means for generating a message indicating an expiration time of a window during which one or more identified devices are permitted to communicate with the apparatus, wherein the expiration time is indicated based on a number of beacon intervals; and means for transmitting the generated message.

Another aspect disclosed is a computer program product. The computer program product comprising a computer readable storage device encoded thereon with instructions that when executed cause an apparatus to perform a method of wireless communication, said method includes generating message indicating an expiration time of a window during which one or more identified devices are permitted to communicate with the apparatus, wherein the expiration time is indicated based on a number of beacon intervals; and transmitting the generated message.

Another aspect of the disclosure provides a method of wireless communication. The method includes receiving, by an apparatus, a message indicating an expiration time of a window during which one or more identified devices are permitted to communicate with an access point, the expiration time being based on a number of beacon intervals; and transmitting, by an apparatus, a message during the window.

Another aspect disclosed is an apparatus. The apparatus includes a receiver configured to receive a message indicating an expiration time of a window during which one or more identified devices are permitted to communicate with an access point, the expiration time being based on a number of beacon intervals; and a transmitter configured to transmit a message during the window.

Another aspect disclosed is an access point. The access point includes an antenna; a receiver configured to receive a message with the antenna indicating an expiration time of a window during which one or more identified devices are permitted to communicate with an access point, the expiration time being based on a number of beacon intervals; and a transmitter configured to transmit a message during the window using the antenna.

Another aspect disclosed is a computer program product. The computer program product includes a computer readable storage device encoded thereon with instructions that when executed cause an apparatus to perform a method of wireless communication, said method including receiving a message indicating an expiration time of a window during which one or more identified devices are permitted to communicate with an access point, the expiration time being based on a number of beacon intervals; and transmitting a message during the window.

Another aspect of the disclosure provides a method of wireless communication. The method includes generating, by an apparatus, a message indicating a start time of a window during which one or more identified devices are permitted to communicate with the apparatus, the start time being based on a time reference maintained by the apparatus; and transmitting, by an apparatus, the generated message.

Another aspect disclosed is an apparatus. The apparatus includes a processing apparatus configured to generate a message indicating a start time of a window during which one or more identified devices are permitted to communicate with the apparatus, the start time being based on a time reference maintained by the apparatus; and a transmitter configured to transmit the generated message.

Another aspect disclosed is an access point. The access point includes an antenna; a processing apparatus configured to generate a message indicating a start time of a window during which one or more identified devices are permitted to communicate with the access point, the start time being based on a time reference maintained by the access point; and a transmitter configured to transmit the generated message with the antenna.

Another aspect disclosed is an apparatus. The apparatus includes means for generating a message indicating a start time of a window during which one or more identified devices are permitted to communicate with the apparatus, the start time being based on a time reference maintained by the apparatus; and means for transmitting the generated message.

Another aspect disclosed is a computer program product. The computer program product includes a computer readable storage device encoded thereon with instructions that when executed cause an apparatus to perform a method of wireless communication, said method includes generating a message indicating a start time of a window during which one or more identified devices are permitted to communicate with an apparatus, the start time being based on a time reference maintained by the apparatus; and transmitting the generated message.

Another aspect of the disclosure provides a method of wireless communication. The method of wireless communication includes receiving, by an apparatus, a message from a wireless communication network indicating a start time of a window during which one or more identified devices are permitted to communicate with an access point, the start time being based on a time reference maintained by the access point; and limiting, by an apparatus, communications on the wireless communication network based on the message.

Another aspect disclosed is an apparatus. The apparatus includes a receiver configured to receive a message from a wireless communication network indicating a start time of a window during which one or more identified devices are permitted to communicate with an access point, the start time being based on a time reference maintained by the access point; and a processing system configured to limit communications on the wireless communication network based on the message.

Another aspect disclosed is a station. The station includes an antenna; a receiver configured to receive a message from a wireless communication network using the antenna and indicating a start time of a window during which one or more identified devices are permitted to communicate with an access point, the start time being based on a time reference maintained by the access point; and a processing system configured to limit communications on the wireless communication network based on the message.

Another aspect disclosed is an apparatus. The apparatus, includes means for receiving a message from a wireless communication network indicating a start time of a window during which one or more identified devices are permitted to communicate with an access point, the start time being based on a time reference maintained by the access point; and means for limiting communications on the wireless communication network based on the message.

Another aspect disclosed is a computer program product. The computer program product includes a computer readable storage device encoded thereon with instructions that when executed cause an apparatus to perform a method of wireless communication, said method includes receiving a message from a wireless communication network indicating a start time of a window during which one or more identified devices are permitted to communicate with an access point, the start time being based on a time reference maintained by the access point; and limiting communications on the wireless communication network based on the message.

Another aspect disclosed is a method of wireless communication. The method includes generating, by an apparatus, a message identifying a specific device or an unrestricted group of devices, and identifying a time period during which the identified specific device or unrestricted group of devices are permitted to communicate with the apparatus; and transmitting, by an apparatus, the generated message.

Another aspect disclosed is an apparatus. The apparatus includes a processing system configured to generate a message identifying a specific device or an unrestricted group of devices, and identifying a time period during which the identified specific device or unrestricted group of devices are permitted to communicate with the apparatus; and a transmitter configured to transmit the generated message.

Another aspect disclosed is an access point. The access point includes an antenna; a processing system configured to generate a message identifying a specific device or an unrestricted group of devices, and identifying a time period during which the identified specific device or unrestricted group of devices are permitted to communicate with the apparatus; and a transmitter configured to transmit the generated message using the antenna.

Another aspect disclosed is an apparatus. The apparatus includes means for generating a message identifying a specific device or an unrestricted group of devices, and identifying a time period during which the identified specific device or unrestricted group of devices are permitted to communicate with the apparatus; and means for transmitting the generated message.

Another aspect disclosed is a computer program product. The computer program product includes a computer readable storage device encoded thereon with instructions that when executed cause an apparatus to perform a method of wireless communication, said method includes generating a message identifying a specific device or an unrestricted group of devices, and identifying a time period during which the identified specific device or unrestricted group of devices are permitted to communicate with the apparatus; and transmitting the generated message.

Another aspect of the disclosure provides a method of wireless communication The method includes receiving, by an apparatus, a message from a wireless communication network identifying a specific device or an unrestricted group of device, and identifying a time period during which the identified device or the identified unrestricted group of devices are permitted to communicate with an access point; and limiting, by an apparatus, communication on the wireless communication network during the time period.

Another aspect disclosed is an apparatus. The apparatus includes a receiver configured to receive a message from a wireless communication network identifying a specific device or an unrestricted group of device, and identifying a time period during which the identified device or the identified unrestricted group of devices are permitted to communicate with an access point; and a processing system configured to limit communication on the wireless communication network during the time period.

Another aspect disclosed is a station. The station includes an antenna; a receiver configured to receive a message from a wireless communication network with the antenna, the message identifying a specific device or an unrestricted group of device, and identifying a time period during which the identified device or the identified unrestricted group of devices are permitted to communicate with an access point; and a processing system configured to limit communication on the wireless communication network during the time period.

Another aspect disclosed is an apparatus. The apparatus includes means for receiving a message from a wireless communication network identifying a specific device or an unrestricted group of device, and identifying a time period during which the identified device or the identified unrestricted group of devices are permitted to communicate with an access point; and means for limiting communication on the wireless communication network during the time period.

Another aspect disclosed is a computer program product. The computer program product includes a computer readable storage device encoded thereon with instructions that when executed cause an apparatus to perform a method of wireless communication, said method including receiving a message from a wireless communication network identifying a specific device or an unrestricted group of device, and identifying a time period during which the identified device or the identified unrestricted group of devices are permitted to communicate with an access point; and limiting communication on the wireless communication network during the time period.

Another aspect of the disclosure provides a method of wireless communication The method includes transmitting, by an apparatus, a message including a target wake time and an identifier for the target wake up time; and transmitting, by an apparatus, a paging message including the identifier for the target wake up time.

Another aspect disclosed is an apparatus. The apparatus includes a transmitter configured to transmit a message including a target wake time and an identifier for the target wake up time, wherein the transmitter is further configured to transmit a paging message including the identifier for the target wake up time.

Another aspect disclosed is an access point. The access point includes an antenna; a transmitter configured to transmit a message using the antenna, the message including a target wake time and an identifier for the target wake up time, wherein the transmitter is further configured to transmit a paging message using the antenna and including the identifier for the target wake up time.

Another aspect disclosed is an apparatus. The apparatus includes means for transmitting a message including a target wake time and an identifier for the target wake up time; and means for transmitting a paging message including the identifier for the target wake up time.

Another aspect disclosed is a computer program product. The computer program product includes a computer readable storage device encoded thereon with instructions that when executed cause an apparatus to perform a method of wireless communication, said method includes transmitting a message including a target wake time and an identifier for the target wake up time; and transmitting a paging message including the identifier for the target wake up time.

Another aspect of the disclosure provides a method of wireless communication The method includes receiving, by an apparatus, a message indicating a target wake time and an identifier for the target wake up time, wherein the receiver is further configured to receive a paging message indicating the identifier for the target wake up time; entering, by an apparatus, a sleep state; and waking, by an apparatus, at the target wake time based on receiving the paging message indicating the identifier for the target wake up time.

Another aspect disclosed is an apparatus. The apparatus includes a receiver configured to receive a message indicating a target wake time and an identifier for the target wake up time, wherein the receiver is further configured to receive a paging message indicating the identifier for the target wake up time; and a processing apparatus configured to enter a sleep state and wake at the target wake time based on receiving the paging message indicating the identifier for the target wake up time.

Another aspect disclosed is a station. The station includes an antenna; a receiver configured to receive a message using the antenna, the message indicating a target wake time and an identifier for the target wake up time, wherein the receiver is further configured to receive a paging message indicating the identifier for the target wake up time; a processing apparatus configured to enter a sleep state and wake at the target wake time based on receiving the paging message indicating the identifier for the target wake up time.

Another aspect disclosed is an apparatus. The apparatus includes means for receiving a message indicating a target wake time and an identifier for the target wake up time, wherein the means for receiving is further configured to receive a paging message indicating the identifier for the target wake up time; and means for entering a sleep state and wake at the target wake time based on receiving the paging message indicating the identifier for the target wake up time.

Another aspect disclosed is a computer program product. The computer program product includes a computer readable storage device encoded thereon with instructions that when executed cause an apparatus to perform a method of wireless communication, said method including receiving a message indicating a target wake time and an identifier for the target wake up time, wherein the receiver is further configured to receive a paging message indicating the identifier for the target wake up time; entering a sleep state; and waking at the target wake time based on receiving the paging message indicating the identifier for the target wake up time.

Another aspect of the disclosure provides a method of wireless communication The method includes generating, by an apparatus, a message indicating a target wake time and an uplink direction indicator, wherein the message further indicates whether a request-to-send message should be transmitted before transmitting uplink data; and transmitting, by an apparatus, the generated message.

Another aspect disclosed is an apparatus. The apparatus includes a processing apparatus configured to generate a message indicating a target wake time and an uplink direction indicator, wherein the message further indicates whether a request-to-send message should be transmitted before transmitting uplink data; and a transmitter configured to transmit the generated message.

Another aspect disclosed is an access point. The access point includes an antenna; a processing apparatus configured to generate a message indicating a target wake time and an uplink direction indicator, wherein the message further indicates whether a request-to-send message should be transmitted before transmitting uplink data; and a transmitter configured to transmit the generated message using the antenna.

Another aspect disclosed is an apparatus. The apparatus includes means for generating a message indicating a target wake time and an uplink direction indicator, wherein the message further indicates whether a request-to-send message should be transmitted before transmitting uplink data; and means for transmitting the generated message.

Another aspect disclosed is a computer program product. The computer program product includes a computer readable storage device encoded thereon with instructions that when executed cause an apparatus to perform a method of wireless communication, said method includes generating a message indicating a target wake time and an uplink direction indicator, wherein the message further indicates whether a request-to-send message should be transmitted before transmitting uplink data; and transmitting the generated message.

Another aspect of the disclosure provides a method of wireless communication The method includes receiving, by an apparatus, a message indicating a target wake time and an uplink direction indicator, wherein the message further indicates whether a request-to-send message should be transmitted before transmitting uplink data; and selectively transmitting, by an apparatus, a request-to-send message based on whether the message indicates a request-to-send message should be transmitted before transmitting uplink data.

Another aspect disclosed is an apparatus. The apparatus includes a receiver configured to receive a message indicating a target wake time and an uplink direction indicator, wherein the message further indicates whether a request-to-send message should be transmitted before transmitting uplink data; and a transmitter configured to selectively transmit a request-to-send message based on whether the message indicates a request-to-send message should be transmitted before transmitting uplink data.

Another aspect disclosed is a station. The station includes an antenna; a receiver configured to receive a message using the antenna, the message indicating a target wake time and an uplink direction indicator, wherein the message further indicates whether a request-to-send message should be transmitted before transmitting uplink data; and a transmitter configured to selectively transmit a request-to-send message based on whether the message indicates a request-to-send message should be transmitted before transmitting uplink data.

Another aspect disclosed is an apparatus. The apparatus includes means for receiving a message indicating a target wake time and an uplink direction indicator, wherein the message further indicates whether a request-to-send message should be transmitted before transmitting uplink data; and means for selectively transmitting a request-to-send message based on whether the message indicates a request-to-send message should be transmitted before transmitting uplink data.

Another aspect disclosed is a computer program product. The computer program product includes a computer readable storage device encoded thereon with instructions that when executed cause an apparatus to perform a method of wireless communication, said method including receiving a message indicating a target wake time and an uplink direction indicator, wherein the message further indicates whether a request-to-send message should be transmitted before transmitting uplink data; and selectively transmitting a request-to-send message based on whether the message indicates a request-to-send message should be transmitted before transmitting uplink data.

Another aspect disclosed is a method. The method includes generating, by an apparatus, a message indicating an expiration time of a window during which one or more identified devices are permitted to communicate with an apparatus, wherein the expiration time is indicated based on a number of beacon intervals, and transmitting, by the apparatus, the generated message. In some aspects, the method further includes indicating the window does not expire by generating the message to indicate a particular number of beacon intervals. In some aspects, the method further includes generating the message to indicate the window does not expire; generating a second message indicating an expiration time of the window, wherein the expiration time is indicated based on a second number of beacon intervals that is not equal to the particular value, and transmitting, by the apparatus, the second message. In some aspects, the method further includes generating the message as a restricted access window (RAW) message, where the restricted access window message defines a period of time that an access point declares as reserved for a selected group of wireless stations. In some aspects, the method also includes generating the restricted access window (RAW) message to indicate a start time and duration of the restricted access window.

Another aspect disclosed is an apparatus. The apparatus includes a processing system configured to generate a message indicating an expiration time of a window during which one or more identified devices are permitted to communicate with the apparatus, wherein the expiration time is indicated based on a number of beacon intervals, and the processing system is further configured to transmit the generated message. In some aspects, the expiration time indicates the window does not expire if the number of beacon intervals equals a particular value. In some aspects, the processing system is further configured to generate the message to indicate the window does not expire, and the processing system is further configured to generate a second message indicating an expiration time of the window, wherein the expiration time is indicated based on a number of beacon intervals not equal to the particular value, and wherein the processing system is further configured to transmit the second message.

In some aspects of the apparatus, the processing system is further configured to generate the message as a restricted access window (RAW) message, wherein the restricted access window message defines a period of time that an access point declares as reserved for a selected group of wireless stations. In some aspects, the processing system is further configured to generate the restricted access window (RAW) message to indicate a start time and duration of the restricted access window.

Another aspect disclosed is a method. The method includes receiving, by an apparatus, a first message, decoding the first message to determine a first number of beacon intervals, determining an expiration time of a window during which one or more identified devices are permitted to communicate with an access point based on the first number of beacon intervals; and transmitting, by the apparatus, a second message during the window. In some aspects, the method also includes determining the window does not expire if the first number of beacon intervals equals a particular value. In some aspects, the method also includes determining that the window does not expire based on the first number of beacon intervals, receiving a third message, determining a second number of beacon intervals based on the second message; and determining the window does expire based on the second number of beacon intervals not equaling the particular value. Some aspects of the method also include decoding the received message as a restricted access window message, wherein the restricted access window message defines a period of time that an access point declares as reserved for a selected group of wireless stations. In some aspects, the method also includes decoding the restricted access window (RAW) message to determine a start time and duration of a restricted access window.

Another aspect disclosed is an apparatus. The apparatus includes a processing system configured to receive a first message; decode the first message to determine a first number of beacon intervals; determine an expiration time of a window during which one or more identified devices are permitted to communicate with an access point based on the first number of beacon intervals; and transmit a second message during the window. In some aspects, the processing system is further configured to determine the window does not expire if the first number of beacon intervals equals a particular value. In some aspects, the processing system is further configured to determine the window does not expire based on the first number of beacon intervals, receive a third message; determine a second number of beacon intervals based on the third message; and determine the window does expire based on the second number of beacon intervals being not equal to the particular value.

In some aspects of the apparatus, the processing system is further configured to decode the received message as a restricted access window message, wherein the restricted access window message defines a period of time that an access point declares as reserved for a selected group of wireless stations. In some aspects of the apparatus, the processing system is further configured to decode the restricted access window (RAW) message to determine a start time and duration of a restricted access window.

Another aspect disclosed is a method for wireless communication. The method includes generating, by an apparatus, a restricted access window (RAW) message identifying a time period during which the apparatus is to communicate data with one or more wireless devices, the message further comprising an indicator indicating a wireless communication flow direction during the time period, transmitting, by the apparatus, the generated message. In some aspects, the indicator indicates whether the data communicated during the time period is uplink or downlink data. In some aspects, the indicator indicates whether the data communicated during the time period is uplink, downlink, or bidirectional data. In some aspects, the method further comprises generating the restricted access window message to comprise a priority indicator indicating a priority between uplink data and downlink data communicated during the time period. In some aspects, the wireless communication flow direction indicator has a bit length of one or two bits. In some aspects, the time period identifies a target wake time (TWT). In some aspects, the method also includes generating the restricted access window (RAW) message to comprise a start time indicator and a duration indicator, wherein the start time indicator indicates a start time of the RAW and the duration indicator indicates a duration of the RAW.

Another aspect disclosed is an apparatus for wireless communication. The apparatus includes a processing system configured to generate a restricted access window (RAW) message identifying a time period during which the apparatus is to communicate data with one or more wireless devices, the message further generated to comprise an indicator indicating a wireless communication flow direction during the time period; and a transmitter configured to transmit the generated message. In some aspects, the indicator indicates whether the data communicated during the time period is uplink or downlink data. In some aspects, the indicator indicates whether the data communicated during the time period is uplink, downlink, or bidirectional data. In some aspects, the processing system is further configured to generate the restricted access window message to comprise a priority indicator indicating a priority of uplink data and downlink data communicated during the time period. In some aspects, the wireless communication flow direction indicator has a bit length of either one or two bits. In some aspects, the time period identifies a target wake time (TWT).

In some aspects, the processing system is further configured to generate the restricted access window (RAW) message to comprise a start time indicator and a duration indicator, wherein the start time indicator indicates a start time of the RAW and the duration indicator indicates a duration of the RAW.

Another aspect disclosed is a method of wireless communication. The method includes receiving, by an apparatus, a restricted access window (RAW) message identifying a time period during which a first device communicates data with one or more second devices, the message further comprising an indicator indicating a wireless communication flow direction; and communicating data, by the apparatus, with the first device based on the wireless communication flow direction indicator. In some aspects, the method also includes decoding the restricted access window (RAW) message to determine whether the data communicated is uplink or downlink data. In some aspects, the method also includes decoding the restricted access window (RAW) message to determine whether the data communicated is uplink, downlink, or bidirectional data. In some aspects, the method also includes decoding the restricted access window (RAW) message to determine a priority of uplink data and downlink data communicated during the time period. In some aspects, the method also includes decoding the wireless communication flow direction indicator based on either one or two bits of the received RAW message. In some aspects, the time period identifies a target wake time (TWT). In some aspects, the method also includes decoding a start time of the RAW and a duration of the RAW based on the restricted access window message.

Another aspect disclosed is an apparatus for wireless communication. The apparatus includes a processing system configured to receive a restricted access window (RAW) message identifying a time period during which a first device communicates data with one or more second devices, the message further comprising an indicator indicating a wireless communication flow direction during the time period. The processing system is further configured to communicate data with the first device based on the wireless communication flow direction indicator. In some aspects, the processing system is further configured to decode the restricted access window message to determine whether the data communicated is uplink or downlink data. In some aspects, the processing system is further configured to decode the restricted access window message to determine whether the data communicated is uplink, downlink, or bidirectional data. In some aspects, the processing system is further configured to decode the restricted access window message to determine a priority of uplink data and downlink data communicated during the time period. In some aspects, the processing system is further configured to decode the wireless communication flow direction indicator based on either one or two bits of the received message. In some aspects, the time period identifies a target wake time (TWT). In some aspects, the processing system is further configured to decode a start time of the RAW and a duration of the RAW based on the restricted access window message.

Another aspect disclosed is a method of wireless communication. The method includes generating, by an apparatus, a restricted access window message indicating devices not associated with the apparatus are permitted to communicate with the apparatus during a time period defined by the message; and transmitting, by the apparatus, the generated message. In some aspects, the method also includes inhibiting a sleep or doze state during the time period. In some aspects, the method includes generating the restricted access window message to indicate whether associated devices may also use the time period for communication with the apparatus. In some aspects, the method further includes generating the restricted access window message to comprise a unique device identifier of a device permitted to communicate with the apparatus during the time period. In some aspects, the method includes receiving a first message from a first non-associated device during the time period, transmitting a response to the first message if the first message is received during the time period. In some aspects, the method further includes generating the restricted access window message further comprises generating the message to comprise an indicator indicating a start time of the time period, the start time being based on an absolute time reference.

Another aspect disclosed is an apparatus for wireless communication. The apparatus includes a processing system configured to generate a restricted access window (RAW) message indicating devices not associated with the apparatus are permitted to communicate with the apparatus during a time period defined by the message; and a transmitter configured to transmit the generated message. In some aspects, the processing system is further configured to inhibit a sleep or doze state during the time period. In some aspects, the processing system is further configured to generate the restricted access window message to comprise a unique device identifier of a device permitted to communicate with the apparatus during the time period. In some aspects, the processing system is further configured to generate the restricted access window message to indicate whether associated devices may also use the time period for communication with the apparatus. In some aspects, the processing system is further configured to receive a first message from a first non-associated device during the time period, and where in the transmitter is further configured to transmit a response to the first message if the first message is received during the time period. In some aspects, the processing system is further configured to generate the restricted access window message to further comprise an indicator indicating a start time of the time period, the start time being based on an absolute time reference.

Another aspect disclosed is a method for wireless communication. The method includes decoding, by a first apparatus, a restricted access window (RAW) message to determine that devices not associated with a second apparatus are permitted to communicate with the second apparatus during a time period defined by the restricted access window message; and transmitting, by the first apparatus, another message to the second apparatus during the time period based on whether the first apparatus is associated with the second apparatus. In some aspects, the transmission comprises transmitting an association message to the second apparatus if the first apparatus is not associated with the second apparatus. In some aspects, the method also includes decoding the restricted access window (RAW) message to determine whether devices associated with the second apparatus are permitted to communicate with the second apparatus during the time period, wherein the transmission comprises transmitting the other message to the second apparatus during the time period if devices associated with the second apparatus are permitted to communicate with the second apparatus during the time period and the first apparatus is associated with the second apparatus.

In some aspects, the method includes determining whether the first apparatus is permitted to communicate with the second apparatus during the time period based on whether a unique device identifier of the first apparatus is included in the restricted access window message. In some aspects, the method further includes decoding the restricted access window message to identify an indicator of a start time of the time period, the start time being based on an absolute time reference.

Another aspect disclosed is a first apparatus for wireless communication. The first apparatus includes a processing system configured to receive a restricted access window message indicating devices not associated with a second apparatus are permitted to communicate with the second apparatus during a time period defined by the restricted access window message; and a transmitter configured to transmit another message to the second apparatus during the time period based on whether the first apparatus is associated with the second apparatus. In some aspects, the transmitter is further configured to transmit an association message to the second apparatus if the first apparatus is not associated with the second apparatus. In some aspects, the processing system is further configured to: decode the restricted access window (RAW) message to determine whether devices associated with the second apparatus are permitted to communicate with the second apparatus during the time period, and the transmitter is further configured to transmit the other message to the second apparatus during the time period if devices associated with the second apparatus are permitted to communicate with the second apparatus during the time period and the first apparatus is associated with the second apparatus. In some aspects, the processing system is further configured to determine whether the first apparatus is permitted to communicate with the second apparatus during the time period based on whether a unique device identifier of the first apparatus is included in the restricted access window message. In some aspects, the processing system is further configured to decode the restricted access window message to identify an indicator of a start time of the time period, the start time being based on an absolute time reference.

Another aspect disclosed is a method for wireless communication. The method includes generating, by an apparatus, a message indicating a start time of a window during which one or more devices are permitted to communicate with the apparatus, the start time being based on an absolute time reference; and transmitting, by the apparatus, the generated message. In some aspects, the absolute time reference is based on a target beacon transmit time (TBTT). In some aspects, the absolute time reference is based on a timing synchronization function (TSF). In some aspects, generating the message further comprises generating a restricted access window message to indicate a start time and duration of a restricted access window. In some aspects, the message is generated as a target wake time information element (TWT IE). In some aspects, the message is generated to further comprise an indicator of a wireless communication flow direction during the window. In some aspects, the indicator of a wireless communication flow direction indicates whether the apparatus transmits or receives data during the window.

Another aspect disclosed is an apparatus for wireless communication. The apparatus includes a processing system configured to generate a message indicating a start time of a window during which one or more devices are permitted to communicate with the apparatus, the start time being based on an absolute time reference, and a transmitter configured to transmit the generated message. In some aspects, the absolute time reference is based on a target beacon transmit time (TBTT). In some aspects, the absolute time reference is based on a timing synchronization function (TSF). In some aspects, generating the message further comprises generating a restricted access window message to indicate a start time and duration of a restricted access window. In some aspects, the processing system is configured to generate the message as a target wake time information element (TWT IE). In some aspects, the message to generated to further comprise an indicator of a wireless communication flow direction during the window. In some aspects, the indicator of a wireless communication flow direction indicates whether the apparatus transmits or receives data during the window.

Another aspect disclosed is an apparatus for wireless communication. The apparatus includes means for generating a message indicating a start time of a window during which one or more devices are permitted to communicate with the apparatus, the start time being based on an absolute time reference, and means for transmitting the generated message. In some aspects, the absolute time reference is based on a target beacon transmit time (TBTT). In some aspects, the absolute time reference is based on a timing synchronization function (TSF). In some aspects, the means for generating is configured to generate the message as a restricted access window message, the restricted access window message comprising an indicator indicating a start time and duration of a restricted access window. In some aspects, the means for generating is configured to generate the message as a target wake time information element (TWT IE). In some aspects, the means for generating is configured to generate the message to further comprise an indicator of a wireless communication flow direction during the window. In some aspects, the indicator of a wireless communication flow direction indicates whether the apparatus transmits or receives data during the window.

Another aspect disclosed is a wireless node for wireless communication. The wireless node includes an antenna, a processing system configured to generate a message indicating a start time of a window during which one or more devices are permitted to communicate with the apparatus, the start time being based on an absolute time reference; and a transmitter configured to transmit the generated message using the antenna.

Another aspect disclosed is a method for wireless communication. The method includes generating, by an apparatus, a message identifying at least one specific device, and generating the message to identify a time period during which the identified at least one specific device is permitted to communicate with the apparatus; and transmitting, by the apparatus, the generated message. In some aspects, generating the message further comprises generating a restricted access window message. In some aspects, the method includes generating the restricted access window message to indicate a start time and a duration of the time period. In some aspects, the method further includes generating the message to comprise a list of the at least one specific device permitted to communicate with the apparatus during the time period. In some aspects, the method further includes generating the message to comprise an indicator of each of the one or more specific devices permitted to communicate with the apparatus during the time period. In some aspects, the method further includes receiving a message from the specific device during the time period; and generating a response to the specific device's message if the specific device's message is received during the time period.

Another aspect disclosed is an apparatus for wireless communication. The apparatus includes a processing system configured to generate a message identifying at least one specific device and configured to generate the message to comprise an identifier of a time period during which the at least one identified specific device is permitted to communicate with the apparatus; and a transmitter configured to transmit the generated message. In some aspects, generating the message further comprises generating a restricted access window message. In some aspects, the processing system is further configured to generate the restricted access window message to indicate a start time and a duration of the time period. In some aspects, the processing system is further configured to generate the message to comprise a list of the one or more specific devices permitted to communicate with the apparatus during the time period. In some aspects, the processing system is further configured to generate the message to comprise an indicator of each of the one or more specific devices permitted to communicate with the apparatus during the time period. In some aspects, the processing system is further configured to receive a message from the specific device during the time period, and wherein the processing system is further configured to generate a response to the specific device's if the specific device's message is received during the time period.

Another aspect disclosed is a method for wireless communication. The method includes decoding, by a first apparatus, a message received from a wireless communications network to identify a specific device, decoding the message to identify a time period during which the identified specific device is permitted to communicate with a second apparatus; and limiting, by the first apparatus, communication with the second apparatus during the time period. In some aspects, the method includes decoding the received message as a restricted access window message. In some aspects, the method includes determining a start time and a duration of a restricted access window based on the restricted access window message. In some aspects, the method includes decoding the restricted access window message to identify a listing of a group of devices permitted to communicate with the second apparatus during the time period. In some aspects, the method further includes decoding the message to identify an indicator of each of the one or more specific devices permitted to communicate with the second apparatus during the time period. In some aspects, limiting, by the first apparatus, communication with the second apparatus during the time period further comprises determining whether the first apparatus is identified by the received message based on the decoding, transmitting a message to the second apparatus during the time period if the first apparatus is identified, and not transmitting a message to the second apparatus during the time period if the first apparatus is not identified.

Another aspect disclosed is a first apparatus for wireless communication. The first apparatus includes a processing system configured to decode a message received from a wireless communication network to identify at least one specific device, decode the message to identify a time period during which the at least one specific device is permitted to communicate with a second apparatus, and limit communication with the second apparatus during the time period. In some aspects, the processing system is further configured to decode the received message as a restricted access window message. In some aspects, the processing system is further configured to determine a start time and a duration of a restricted access window based on the restricted access window message. In some aspects, the processing system is further configured to decode the restricted access window message to identify a list of the one or more specific devices permitted to communicate with the second apparatus during the window. In some aspects, the processing system is further configured to decode the message to identify an indicator of each of the one or more specific devices permitted to communicate with the second apparatus during the time period. In some aspects, the processing system is configured to limit communication with the second apparatus during the time period by: determining whether the first apparatus is identified by the received message based on the decoding; wherein the first apparatus further comprises a transmitter configured to transmit a message to the second apparatus during the time period if the first apparatus is identified, and the transmitter is further configured to not transmit the message to the second apparatus during the time period if the first apparatus is not identified.

Another aspect disclosed is a method of wireless communication. The method includes generating, by an apparatus, a first message comprising a first indicator of a duration of a window during which one or more devices are permitted to communicate with the apparatus, wherein a limited duration is indicated based on the first indicator indicating a number of beacon intervals; and transmitting, by the apparatus, the first message. In some aspects, the duration is unlimited if the first indicator indicates a particular value. In some aspects, the first indicator in the first message indicates the window has an unlimited duration, the method further including generating a second message comprising a second indicator indicating an updated duration of the window, wherein the second indicator indicates the updated duration is limited by indicating a value that is different from the particular value; and transmitting, by the apparatus, the second message. In some aspects, the first message is generated as a restricted access window (RAW) message, wherein the window is a restricted access window. In some aspects, the restricted access window (RAW) message is generated to comprise a start time indicator indicating a start time of the restricted access window. IN some aspects, the message is generated to comprise a list of the one or more devices.

Another aspect disclosed is an apparatus for wireless communication. The apparatus includes a processing system configured to generate a first message comprising a first indicator indicating a duration of a window during which one or more devices are permitted to communicate with the apparatus, wherein a limited duration is indicated based on a number of beacon intervals; and a transmitter configured to transmit the generated message. In some aspects, the duration is unlimited if the first indicator indicates a particular value. In some aspects, the processing system is further configured to generate the first message to indicate the window has an unlimited duration, and the processing system is further configured to generate a second message comprising a second indicator indicating an updated duration of the window, wherein the second indicator indicates the updated duration is limited by indicating a value that is different from the particular value, and the transmitter is further configured to transmit the second message. In some aspects, the first message is generated as a restricted access window (RAW) message, wherein the window is a restricted access window (RAW). In some aspects, the processing system is further configured to generate the restricted access window (RAW) message to comprise a start time indicator indicating a start time of the restricted access window. In some aspects, the processing system is further configured to generate the first message to comprise a list of the one or more devices.

Another aspect disclosed is a method of wireless communication. The method includes decoding, by a first apparatus, a first message comprising a first indicator of a duration of a window during which one or more devices are permitted to communicate with a second apparatus, wherein a limited duration is indicated by the first indicator based on a number of beacon intervals; and transmitting, by the first apparatus, a second message to the second apparatus during the window based on the indicated duration.

In some aspects, the method also includes comprising determining the window has an unlimited duration if the first indicator has a particular value. In some aspects, the method also includes determining that the window has an unlimited duration based on the first indicator indicating the particular value; and determining, based on a received third message comprising a second indicator, an updated duration of the window is limited based on the second indicator indicating a number of beacon intervals. In some aspects, the method also includes decoding the first message as a restricted access window message, wherein the window is a restricted access window. In some aspects, the method includes decoding the restricted access window (RAW) message to identify a start time indicator indicating a start time of the restricted access window. In some aspects, the method also includes decoding the first message to identify a list of the one or more devices permitted to communicate with the apparatus during the window.

Another aspect disclosed is a first apparatus for wireless communication. The method includes a processing system configured to: decode a first message comprising a first indicator of a duration of a window during which one or more devices are permitted to communicate with a second apparatus, wherein a limited duration is indicated by the first indicator based on a number of beacon intervals; and a transmitter configured to transmit a second message to the second apparatus during the window. In some aspects, the processing system is further configured to determine the window has an unlimited duration if the first indicator has a particular value. In some aspects, the processing system is further configured to determine the window has an unlimited duration based on the first indicator indicating the particular value, the processing system is further configured to determine an updated duration based on a received third message comprising a second indicator, and determine the updated duration is limited based on the second indicator indicating a value different than the particular value.

In some aspects, the processing system is further configured to decode the first received message as a restricted access window message, wherein the window is a restricted access window. In some aspects, the processing system is further configured to decode the restricted access window (RAW) message to determine a start time of the restricted access window based on a start time indicator included in the restricted access window (RAW) message. In some aspects, the processing system is further configured to decode the first message to identify a list of the one or more devices.

Another aspect disclosed is a method of wireless communication. The method includes generating, by an apparatus, a first message comprising a first indicator indicating a number of beacon intervals that each have a window during which one or more devices are permitted to communicate with the apparatus; and transmitting, by the apparatus, the first message. In some aspects, the number of beacon intervals is unlimited if the first indicator indicates a particular value. In some aspects, the first indicator in the first message indicates the number of beacon intervals is unlimited, the method further includes generating a second message comprising a second indicator indicating a limited number of beacon intervals that each have a window during which one or more devices are permitted to communicate with the apparatus by indicating a value that is different from the particular value; and transmitting, by the apparatus, the second message. In some aspects, the method further includes generating the first message comprises generating a raw parameter set (RPS) element. In some aspects, the first message is generated to comprise a start time indicator indicating a start time of each of the windows within the beacon intervals. In some aspects, the first message further comprises a duration indicator indicating a duration of each of the windows within the beacon intervals. In some aspects, the message is generated to comprise a list of the one or more devices.

Another aspect disclosed is an apparatus for wireless communication. The apparatus includes a processing system configured to generate a first message comprising a first indicator indicating a number of beacon intervals that each have a window during which one or more devices are permitted to communicate with the apparatus; and a transmitter configured to transmit the generated message. In some aspects, the number of beacon intervals is unlimited if the first indicator indicates a particular value. In some aspects of the apparatus, the processing system is further configured to generate the first message to indicate the number of beacon intervals is unlimited, and the processing system is further configured to generate a second message comprising a second indicator indicating a limited number of beacon intervals that have a window during which one or more devices are permitted to communicate with the apparatus by indicating a value that is different from the particular value, and the transmitter is further configured to transmit the second message. In some aspects of the apparatus, generating the first message comprises generating a raw parameter set (RPS) element.

In some aspects of the apparatus, the processing system is further configured to generate the first message to comprise a start time indicator indicating a start time of each window within the beacon intervals. In some aspects, the processing system is further configured to generate the first message to comprise a duration indicator indicating a duration of each window within the beacon intervals. In some aspects, the processing system is further configured to generate the first message to comprise a list of the one or more devices.

Another aspect disclosed is a method of wireless communication. The method includes decoding, by a first apparatus, a first message comprising a first indicator indicating a number of beacon intervals that each have a window during which one or more devices are permitted to communicate with a second apparatus; and transmitting, by the first apparatus, a second message to the second apparatus during one of the windows based on the first indicator. In some aspects, the method further includes determining the number of beacon intervals is unlimited if the first indicator has a particular value. In some aspects, the method also includes determining that the number of beacon intervals is unlimited based on the first indicator indicating the particular value; and determining, based on a received third message comprising a second indicator, a limited number of beacon intervals that each have a window during which one or more devices are permitted to communicate with the second apparatus based on the second indicator indicating a number of beacon intervals different than the particular value. In some aspects, the method further includes decoding the first message to identify a start time indicator indicating a start time of each window within the beacon intervals. In some aspects, the method also includes decoding the first message to identify a duration indicator indicating a duration of each window within the beacon intervals. In some aspects, the method further includes decoding the first message to identify a list of the one or more devices permitted to communicate with the apparatus during the window.

Another aspect disclosed is a first apparatus for wireless communication. The method includes a processing system configured to: decode a first message comprising a first indicator of a number of beacon intervals that each have a window during which one or more devices are permitted to communicate with a second apparatus; and a transmitter configured to transmit a second message to the second apparatus during one of the windows based on the first indicator. In some aspects, the processing system is further configured to determine the number of beacon intervals is unlimited if the first indicator has a particular value. In some aspects, the processing system is further configured to determine the number of beacon intervals is unlimited based on the first indicator indicating the particular value, and the processing system is further configured to determine an updated number of beacon intervals based on a received third message comprising a second indicator, and determine the updated number of beacon intervals that each have a window during which one or more devices are permitted to communicate with the second apparatus is limited based on the second indicator indicating a value different than the particular value.

In some aspects of the apparatus, the processing system is further configured to decode the first message to determine a start time of each window within the beacon intervals based on a start time indicator included in the first message. In some aspects of the apparatus, the processing system is further configured to decode the first message to determine a duration of each window within the beacon intervals based on a duration indicator included in the first message. In some aspects of the apparatus, the processing system is further configured to decode the first message to identify a list of the one or more devices.

### BRIEF DESCRIPTION OF THE DRAWINGS

FIG. 1 illustrates an example of a wireless communication system in which aspects of the present disclosure may be employed.
FIG. 2 illustrates an example of a wireless device that may be employed within the wireless communication system of FIG. 1.
FIG. 3 illustrates an example of components that may be included within the wireless device of FIG. 2 to transmit wireless communications.
FIG. 4 illustrates an example of components that may be included within the wireless device of FIG. 2 to transmit wireless communications.
FIG. 5 is a flowchart of a method of wireless communication in accordance with one implementation.
FIG. 6 is a flowchart of a method of wireless communication in accordance with one implementation.
FIG. 7 shows one implementation of the message identifying a wireless communication flow direction.
FIG. 8 is a flowchart of a method of wireless communication in accordance with one implementation.
FIG. 9 is a flowchart of a method of wireless communication in accordance with one implementation.
FIG. 10 shows one implementation of the message identifying a wireless communication flow direction.
FIG.11 is a flowchart of a method of wireless communication in accordance with one implementation.
FIG. 12 is a flowchart of a method of wireless communication in accordance with one implementation.
FIG. 13 shows one implementation of the message identifying a wireless communication flow direction.
FIG. 14 is a flowchart of a method of wireless communication in accordance with one implementation.
FIG. 15 is a flowchart of a method of wireless communication in accordance with one implementation.
FIG. 16 shows one implementation of the message identifying a wireless communication flow direction.
FIG.17 is a flowchart of a method of wireless communication in accordance with one implementation.
FIG. 18 is a flowchart of a method of wireless communication in accordance with one implementation.
FIG. 19 shows one implementation of the message identifying a wireless communication flow direction.
FIG. 20 is a flowchart of a method of wireless communication in accordance with one implementation.
FIG. 21 is a flowchart of a method of wireless communication in accordance with one implementation.
FIG.22 is a flowchart of a method of wireless communication in accordance with one implementation.
FIG. 23 is a flowchart of a method of wireless communication in accordance with one implementation.

### DETAILED DESCRIPTION

Various aspects of the novel systems, apparatuses, and methods are described more fully hereinafter with reference to the accompanying drawings. The teachings disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the novel systems, apparatuses, and methods disclosed herein, whether implemented independently of or combined with any other aspect of the invention. For example, an apparatus may be implemented or a method may be practiced using any number of the aspects set forth herein. In addition, the scope of the invention is intended to cover such an apparatus or method which is practiced using other structure, functionality, or structure and functionality in addition to or other than the various aspects of the invention set forth herein. It should be understood that any aspect disclosed herein may be embodied by one or more elements of a claim.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

Wireless network technologies may include various types of wireless local area networks (WLANs). A WLAN may be used to interconnect nearby devices together, employing widely used networking protocols. The various aspects described herein may apply to any communication standard, such as WiFi or, more generally, any member of the IEEE 802.11 family of wireless protocols. For example, the various aspects described herein may be used as part of the IEEE 802.11ah protocol, which uses sub-1GHz bands.

In some aspects, wireless signals in a sub-gigahertz band may be transmitted according to the 802.11 ah protocol using orthogonal frequency-division multiplexing (OFDM), direct-sequence spread spectrum (DSSS) communications, a combination of OFDM and DSSS communications, or other schemes. Implementations of the 802.11ah protocol may be used for sensors, metering, and smart grid networks. Advantageously, aspects of certain devices implementing the 802.11ah protocol may consume less power than devices implementing other wireless protocols, and/or may be used to transmit wireless signals across a relatively long range, for example about one kilometer or longer.

In some implementations, a WLAN includes various devices which are the components that access the wireless network. For example, there may be two types of devices: access points ("APs") and clients (also referred to as stations, or "STAs"). In general, an AP serves as a hub or base station for the WLAN and a STA serves as a user of the WLAN. For example, an STA may be a laptop computer, a personal digital assistant (PDA), a mobile phone, etc. In an example, an STA connects to an AP via a WiFi (e.g., IEEE 802.11 protocol such as 802.11ah) compliant wireless link to obtain general connectivity to the Internet or to other wide area networks. In some implementations, an STA may also be used as an AP.

An access point ("AP") may also comprise, be implemented as, or known as a NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, or some other terminology. The access point may be a main or relay base station. A relay base station relays data between wireless stations and another base station, being the main base station or another relay base station.

A station "STA" may also comprise, be implemented as, or known as an access terminal ("AT"), a subscriber station, a subscriber unit, a mobile station, a remote station, a remote terminal, a user terminal, a user agent, a user device, user equipment, or some other terminology. In some implementations, an access terminal may comprise a cellular telephone, a cordless telephone, a Session Initiation Protocol ("SIP") phone, a wireless local loop ("WLL") station, a personal digital assistant ("PDA"), a handheld device having wireless connection capability, or some other suitable processing device connected to a wireless modem. Accordingly, one or more aspects taught herein may be incorporated into a phone (e.g., a cellular phone or smartphone), a computer (e.g., a laptop), a portable communication device, a headset, a portable computing device (e.g., a personal data assistant), an entertainment device (e.g., a music or video device, or a satellite radio), a gaming device or system, a global positioning system device, or any other suitable device that is configured to communicate via a wireless medium.

As discussed above, certain of the devices described herein may implement the 802.11ah standard, for example. Such devices, whether used as an STA or AP or other device, may be used for smart metering or in a smart grid network. Such devices may provide sensor applications or be used in home automation. The devices may instead or in addition be used in a healthcare context, for example for personal healthcare. They may also be used for surveillance, to enable extended-range Internet connectivity (e.g. for use with hotspots), or to implement machine-to-machine communications.

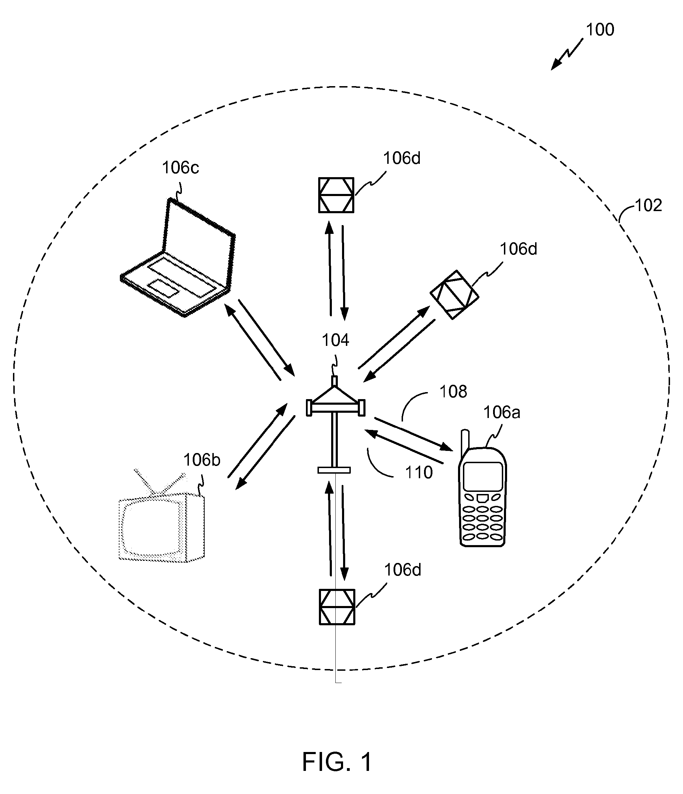

FIG. 1 illustrates an example of a wireless communication system 100 in which aspects of the present disclosure may be employed. The wireless communication system 100 may operate pursuant to a wireless standard, for example the 802.11ah standard. The wireless communication system 100 may include an AP 104, which communicates with STAs 106.

A variety of processes and methods may be used for transmissions in the wireless communication system 100 between the AP 104 and the STAs 106. For example, signals may be sent and received between the AP 104 and the STAs 106 in accordance with OFDM/OFDMA techniques. If this is the case, the wireless communication system 100 may be referred to as an OFDM/OFDMA system. Alternatively, signals may be sent and received between the AP 104 and the STAs 106 in accordance with CDMA techniques. If this is the case, the wireless communication system 100 may be referred to as a CDMA system.

A communication link that facilitates transmission from the AP 104 to one or more of the STAs 106 may be referred to as a downlink (DL) 108, and a communication link that facilitates transmission from one or more of the STAs 106 to the AP 104 may be referred to as an uplink (UL) 110. Alternatively, a downlink 108 may be referred to as a forward link or a forward channel, and an uplink 110 may be referred to as a reverse link or a reverse channel.

The AP 104 may act as a base station and provide wireless communication coverage in a basic service area (BSA) 102. The AP 104 along with the STAs 106 associated with the AP 104 that use the AP 104 for communication may be referred to as a basic service set (BSS). It should be noted that the wireless communication system 100 may not have a central AP 104, but rather may function as a peer-to-peer network between the STAs 106. Accordingly, the functions of the AP 104 described herein may alternatively be performed by one or more of the STAs 106.

The STAs 106 are not limited in type and may include a variety of different STAs. For example, as illustrated in FIG. 1, STAs 106 can include a cellular phone 106a, a television 106b, a laptop 106c, and a number of sensors 106d (e.g. a weather sensor or other sensor capable of communicating using a wireless protocol), to name a few.

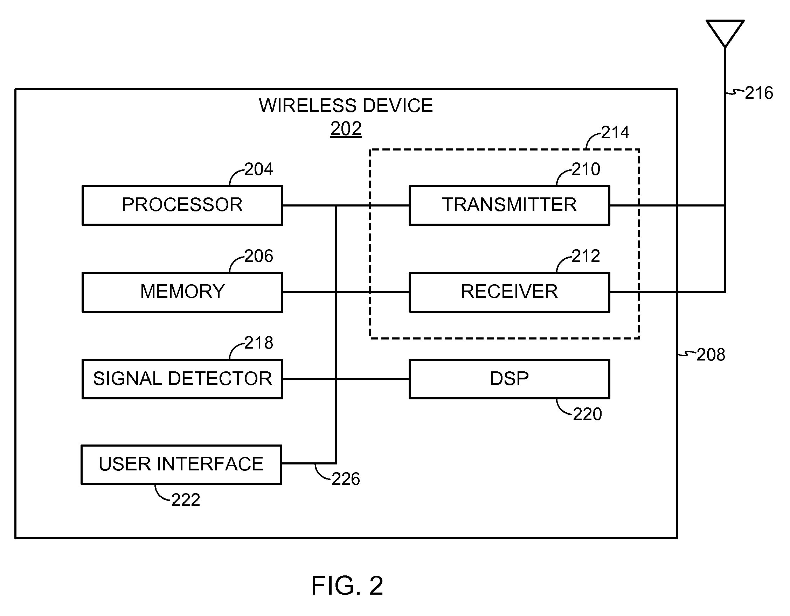

FIG. 2 illustrates various components that may be utilized in a wireless device 202 that may be employed within the wireless communication system 100. The wireless device 202 is an example of a device that may be configured to implement the various methods described herein. For example, the wireless device 202 may comprise the AP 104 or one of the STAs 106.

The wireless device 202 may include a processor 204 which controls operation of the wireless device 202. The processor 204 may also be referred to as a central processing unit (CPU). Memory 206, which may include both read-only memory (ROM) and random access memory (RAM), provides instructions and data to the processor 204. A portion of the memory 206 may also include non-volatile random access memory (NVRAM). The processor 204 typically performs logical and arithmetic operations based on program instructions stored within the memory 206. The instructions in the memory 206 may be executable to implement the methods described herein.

When the wireless device 202 is implemented or used as a transmitting node, the processor 204 may be configured to select one of a plurality of medium access control (MAC) header types, and to generate a packet having that MAC header type. For example, the processor 204 may be configured to generate a packet comprising a MAC header and a payload and to determine what type of MAC header to use, as discussed in further detail below.

When the wireless device 202 is implemented or used as a receiving node, the processor 204 may be configured to process packets of a plurality of different MAC header types. For example, the processor 204 may be configured to determine the type of MAC header used in a packet and process the packet and/or fields of the MAC header accordingly as further discussed below.

The processor 204 may comprise or be a component of a processing system implemented with one or more hardware processors. The one or more processors may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that can perform calculations or other manipulations of information.

The processing system may also include machine-readable media for storing software. Software shall be construed broadly to mean any type of instructions, whether referred to as software, firmware, middleware, microcode, hardware description language, or otherwise. Instructions may include code (e.g., in source code format, binary code format, executable code format, or any other suitable format of code). The instructions, when executed by the one or more processors, cause the processing system to perform the various functions described herein.

The wireless device 202 may also include a transmitter 210 and a receiver 212 to allow transmission and reception of data between the wireless device 202 and a remote location. Further, the transmitters 210 and the receiver 212 may be configured to allow transmission and reception of setup and/or configuration packets or frames between the wireless device 202 and a remote location including, for example, an AP. The transmitter 210 and receiver 212 may be combined into a transceiver 214. An antenna 216 may be attached to the housing 208 and electrically coupled to the transceiver 214. Alternatively, or additionally, the wireless device 202 may include an antenna 216 formed as part of the housing 208 or may be an internal antenna. The wireless device 202 may also include (not shown) multiple transmitters, multiple receivers, multiple transceivers, and/or multiple antennas.

The wireless device 202 may also include a signal detector 218 that may be used in an effort to detect and quantify the level of signals received by the transceiver 214. The signal detector 218 may detect such signals as total energy, energy per subcarrier per symbol, power spectral density and other signals. The wireless device 202 may also include a digital signal processor (DSP) 220 for use in processing signals. The DSP 220 may be configured to generate a data unit for transmission. In some aspects, the data unit may comprise a physical layer data unit (PPDU). In some aspects, the PPDU is referred to as a packet or a frame.

The wireless device 202 may further comprise a user interface 222 in some aspects. The user interface 222 may comprise a keypad, a microphone, a speaker, and/or a display. The user interface 222 may include any element or component that conveys information to a user of the wireless device 202 and/or receives input from the user.

The various components of the wireless device 202 may be housed within a housing 208. Further, the various components of the wireless device 202 may be coupled together by a bus system 226. The bus system 226 may include a data bus, for example, as well as a power bus, a control signal bus, and a status signal bus in addition to the data bus. Those of skill in the art will appreciate the components of the wireless device 202 may be coupled together, or may accept or provide inputs to each other using some other mechanism.

Although a number of separate components are illustrated in FIG. 2, those of skill in the art will recognize that one or more of the components may be combined or commonly implemented. For example, the processor 204 may be used to implement not only the functionality described above with respect to the processor 204, but also to implement the functionality described above with respect to the signal detector 218 and/or the DSP 220. Further, each of the components illustrated in FIG. 2 may be implemented using a plurality of separate elements.

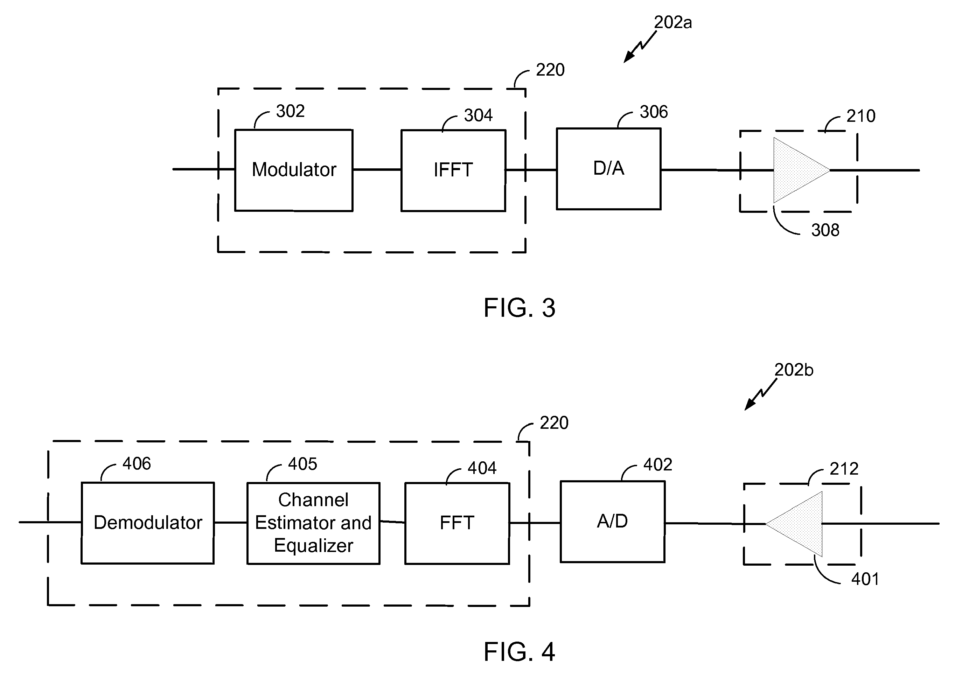

As discussed above, the wireless device 202 may comprise an AP 104 or a STA 106, and may be used to transmit and/or receive communications. FIG. 3 illustrates various components that may be utilized in the wireless device 202 to transmit wireless communications. The components illustrated in FIG. 3 may be used, for example, to transmit OFDM communications. In some aspects, the components illustrated in FIG. 3 are used to transmit data units with training fields with peak-to-power average ratio is as low as possible, as will be discussed in additional detail below. For ease of reference, the wireless device 202 configured with the components illustrated in FIG. 3 is hereinafter referred to as a wireless device 202a.

The wireless device 202a may comprise a modulator 302 configured to modulate bits for transmission. For example, the modulator 302 may determine a plurality of symbols from bits received from the processor 204 or the user interface 222, for example by mapping bits to a plurality of symbols according to a constellation. The bits may correspond to user data or to control information. In some aspects, the bits are received in codewords. In one aspect, the modulator 302 comprises a QAM (quadrature amplitude modulation) modulator, for example a 16-QAM modulator or a 64-QAM modulator. In other aspects, the modulator 302 comprises a binary phase-shift keying (BPSK) modulator or a quadrature phase-shift keying (QPSK) modulator.

The wireless device 202a may further comprise a transform module 304 configured to convert symbols or otherwise modulated bits from the modulator 302 into a time domain. In FIG. 3, the transform module 304 is illustrated as being implemented by an inverse fast Fourier transform (IFFT) module. In some implementations, there may be multiple transform modules (not shown) that transform units of data of different sizes.

In FIG. 3, the modulator 302 and the transform module 304 are illustrated as being implemented in the DSP 220. In some aspects, however, one or both of the modulator 302 and the transform module 304 are implemented in the processor 204 or in another element of the wireless device 202.

As discussed above, the DSP 220 may be configured to generate a data unit for transmission. In some aspects, the modulator 302 and the transform module 304 may be configured to generate a data unit comprising a plurality of fields including control information and a plurality of data symbols. The fields including the control information may comprise one or more training fields, for example, and one or more signal (SIG) fields. Each of the training fields may include a known sequence of bits or symbols. Each of the SIG fields may include information about the data unit, for example a description of a length or data rate of the data unit.

Returning to the description of FIG. 3, the wireless device 202a may further comprise a digital to analog converter 306 configured to convert the output of the transform module into an analog signal. For example, the time-domain output of the transform module 306 may be converted to a baseband OFDM signal by the digital to analog converter 306. The digital to analog converter 306 may be implemented in the processor 204 or in another element of the wireless device 202. In some aspects, the digital to analog converter 306 is implemented in the transceiver 214 or in a data transmission processor.

The analog signal may be wirelessly transmitted by the transmitter 210. The analog signal may be further processed before being transmitted by the transmitter 210, for example by being filtered or by being upconverted to an intermediate or carrier frequency. In the implementation illustrated in FIG. 3, the transmitter 210 includes a transmit amplifier 308. Prior to being transmitted, the analog signal may be amplified by the transmit amplifier 308. In some aspects, the amplifier 308 comprises a low noise amplifier (LNA).

The transmitter 210 is configured to transmit one or more packets, frames, or data units in a wireless signal based on the analog signal. The data units may be generated using the processor 204 and/or the DSP 220, for example using the modulator 302 and the transform module 304 as discussed above.

FIG. 4 illustrates various components that may be utilized in the wireless device 202 to receive wireless communications. The components illustrated in FIG. 4 may be used, for example, to receive OFDM communications. In some implementations, the components illustrated in FIG. 4 are used to receive packets, frames, or data units that include one or more training fields, as will be discussed in additional detail below. For example, the components illustrated in FIG. 4 may be used to receive data units transmitted by the components discussed above with respect to FIG. 3. For ease of reference, the wireless device 202 configured with the components illustrated in FIG. 4 is hereinafter referred to as a wireless device 202b.

The receiver 212 is configured to receive one or more packets, frames, or data units in a wireless signal.

In the implementation illustrated in FIG. 4, the receiver 212 includes a receive amplifier 401. The receive amplifier 401 may be configured to amplify the wireless signal received by the receiver 212. In some aspects, the receiver 212 is configured to adjust the gain of the receive amplifier 401 using an automatic gain control (AGC) procedure. In some aspects, the automatic gain control uses information in one or more received training fields, such as a received short training field (STF) for example, to adjust the gain. Those having ordinary skill in the art will understand methods for performing AGC. In some aspects, the amplifier 401 comprises an LNA.

The wireless device 202b may comprise an analog to digital converter 402 configured to convert the amplified wireless signal from the receiver 212 into a digital representation thereof. Further to being amplified, the wireless signal may be processed before being converted by the digital to analog converter 402, for example by being filtered or by being downconverted to an intermediate or baseband frequency. The analog to digital converter 402 may be implemented in the processor 204 or in another element of the wireless device 202. In some aspects, the analog to digital converter 402 is implemented in the transceiver 214 or in a data receive processor.

The wireless device 202b may further comprise a transform module 404 configured to convert the representation the wireless signal into a frequency spectrum. In FIG. 4, the transform module 404 is illustrated as being implemented by a fast Fourier transform (FFT) module. In some aspects, the transform module may identify a symbol for each point that it uses.

The wireless device 202b may further comprise a channel estimator and equalizer 405 configured to form an estimate of the channel over which the data unit is received, and to remove certain effects of the channel based on the channel estimate. For example, the channel estimator may be configured to approximate a function of the channel, and the channel equalizer may be configured to apply an inverse of that function to the data in the frequency spectrum.

In some aspects, the channel estimator and equalizer 405 uses information in one or more received training fields, such as a long training field (LTF) for example, to estimate the channel. The channel estimate may be formed based on one or more LTFs received at the beginning of the data unit. This channel estimate may thereafter be used to equalize data symbols that follow the one or more LTFs. After a certain period of time or after a certain number of data symbols, one or more additional LTFs may be received in the data unit. The channel estimate may be updated or a new estimate formed using the additional LTFs. This new or update channel estimate may be used to equalize data symbols that follow the additional LTFs. In some aspects, the new or updated channel estimate is used to re-equalize data symbols preceding the additional LTFs. Those having ordinary skill in the art will understand methods for forming a channel estimate.

The wireless device 202b may further comprise a demodulator 406 configured to demodulate the equalized data. For example, the demodulator 406 may determine a plurality of bits from symbols output by the transform module 404 and the channel estimator and equalizer 405, for example by reversing a mapping of bits to a symbol in a constellation. The bits may be processed or evaluated by the processor 204, or used to display or otherwise output information to the user interface 222. In this way, data and/or information may be decoded. In some aspects, the bits correspond to codewords. In one aspect, the demodulator 406 comprises a QAM (quadrature amplitude modulation) demodulator, for example a 16-QAM demodulator or a 64-QAM demodulator. In other aspects, the demodulator 406 comprises a binary phase-shift keying (BPSK) demodulator or a quadrature phase-shift keying (QPSK) demodulator.

In FIG. 4, the transform module 404, the channel estimator and equalizer 405, and the demodulator 406 are illustrated as being implemented in the DSP 220. In some aspects, however, one or more of the transform module 404, the channel estimator and equalizer 405, and the demodulator 406 are implemented in the processor 204 or in another element of the wireless device 202.

As discussed above, the wireless signal received at the receiver 212 comprises one or more data units. Using the functions or components described above, the data units or data symbols therein may be decoded evaluated or otherwise evaluated or processed. For example, the processor 204 and/or the DSP 220 may be used to decode data symbols in the data units using the transform module 404, the channel estimator and equalizer 405, and the demodulator 406.

Data units exchanged by the AP 104 and the STA 106 may include control information or data, as discussed above. At the physical (PHY) layer, these data units may be referred to as physical layer protocol data units (PPDUs). In some aspects, a PPDU may be referred to as a packet, frame, or physical layer packet. Each PPDU may comprise a preamble and a payload. The preamble may include training fields and a SIG field. The payload may comprise a Media Access Control (MAC) header or data for other layers, and/or user data, for example. The payload may be transmitted using one or more data symbols. The systems, methods, and devices herein may utilize data units with training fields whose peak-to-power ratio has been minimized.

In wireless communications such as those specified in the IEEE 802.11 family of wireless protocols, multiple stations share a transmission medium using a media access control protocol. A beacon frame, which is one of management and control frames that support data transfer, may be used to establish and maintain the communications in an orderly fashion. In some applications such as those specified in the 802.11ah protocol, a restricted access window may be used to define a period of time that an access point declares as reserved for a selected group of wireless stations. However, stations that are not associated with the access point cannot contend for the medium when a restricted access window is open. Additionally, the restricted access window cannot currently be specifically defined to be for uplink or downlink transmissions only. Thus, it is beneficial to have a message defining a time period in which the access point will accept messages from non-associated stations. It is additionally beneficial to provide for an ability to specify the type of communication permitted during a restricted access window.

In implementations as will be described below, an access point (AP) generates a message a period of time that an access point declares as reserved for a selected group of wireless stations, and sends the message to the associated wireless stations. Upon receipt of the message, the wireless stations may transmit a packet to the access point during the identified time period. In one implementation, the message indicates an indication as to whether non-associated stations are permitted to transmit a request to the access point during the period of time. In another implementation, the message indicates the nature of communication between stations and the access point during the time period. For example, the message may indicate whether communication during the time period includes uplink data, downlink data, or both. In one implementation, the message is sent to all the wireless stations associated with the access point. These implementations may be applied in processes and standards associated with IEEE 802.11 and/or 802.11ah among others.

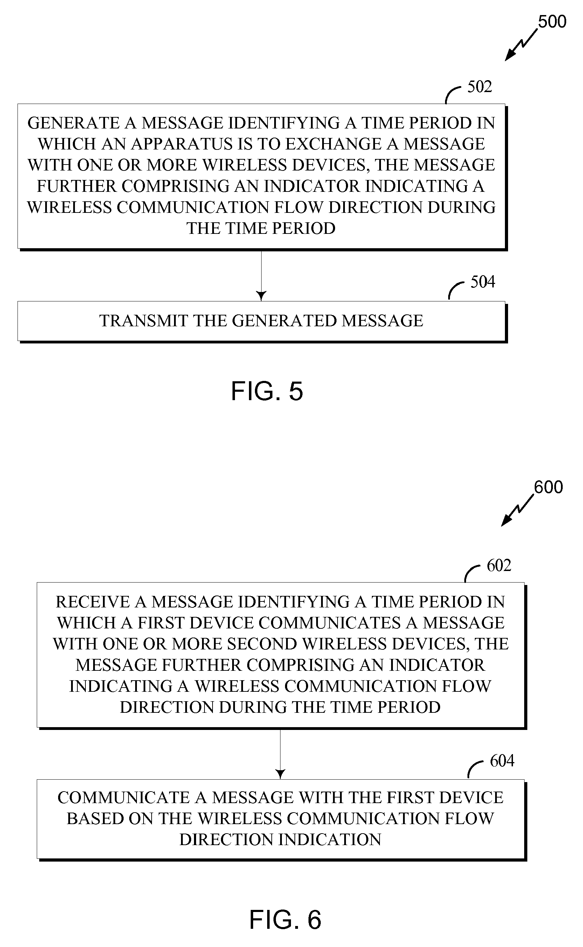

FIG. 5 is a flowchart of a method of wireless communication in accordance with one implementation. The method 500 may be performed by an apparatus for wireless communication, such as the access point (AP) 104 (shown in FIG. 1) or the wireless device 202 shown in FIG. 2. Method 500 may enable improved management of data transfer between an access point and one or more stations during time periods reserved for such data transfer. Because such time periods are of a finite duration, specifying a type of traffic that may be transferred during the time period can result in more efficient operation of a wireless communication network.

At block 502, the method includes generating a message identifying a time period in which an apparatus is to communicate a message with one or more wireless devices. The message further indicates a wireless communication flow direction. In an aspect, the wireless communication flow direction indicator in the message indicates whether the communication of a message during the time period is uplink or downlink data. For example, the message may be generated to indicate whether the apparatus performing process 500 will transmit a message or receive a message during the time period. In an aspect, the message is generated to indicate a priority of downlink data and uplink data. For example, the message may be generated to indicate that downlink data is higher priority than uplink data. In an aspect, the message may be generated to further indicate that bidirectional data may be communicated during the time period. A field in the message may provide the indication. In an aspect, the field may be one bit in length. In another aspect, the field may be more than one bit in length, for example, the field may be two bits in length. In some aspects, the message may be generated as a restricted access window (RAW) message, such as the RAW message of the 802.11 or 802.11ah protocol.

Some aspects of block 502 may perform one or more of the functions discussed with respect to blocks 802, 1102, 1402, 1702, and/or 2202.

In an aspect, the processor 204 may be configured to perform one or more of the functions discussed with respect to block 502. In an aspect, means for generating may be the processor 204.

In block 504, the generated message is transmitted. In one aspect, the transmitter 210 may be configured to perform one or more of the functions discussed with respect to block 504. In an aspect, means for transmitting the generated message may include the transmitter 210 of Figure 2. In another aspect, the processor 204 may be configured to perform one or more of the functions discussed above with respect to block 504. In an aspect, means for transmitting the generated message may include the processor 204.

FIG. 6 is a flowchart of a method of wireless communication in accordance with one implementation. The method 600 may be performed by an apparatus for wireless communication, such as the station 106 (shown in FIG. 1), or the wireless device 202 shown in FIG. 2. The method 600 may enable a station to interoperate with an access point performing process 500 above. At block 602, the method includes receiving a message identifying a time period in which a first device communicates a message with one or more second wireless devices, the message further comprising an indicator indicating a wireless communication flow direction during the time period. In an aspect, the wireless communication flow direction indicator in the message indicates whether the communication of a message during the time period is uplink or downlink data. For example, the message indicates whether the apparatus performing process 600 will transmit a message or receive a message during the time period. In an aspect, the message may further indicate that bidirectional data may be communicated during the time period. A field in the message may provide the indication. In an aspect, the field may be one bit in length. In another aspect, the field may be more than one bit in length, for example, the field may be two bits in length.

Some aspects of block 602 include decoding the received message as a restricted access window (RAW) message. In some aspects, the received message is decoded to determine whether the communication of data during the time period is uplink data or downlink data. In some aspects, the received message is decoded to determine whether the communication of data during the time period is uplink, downlink, or bidirectional data. In some aspects, of block 602, the indicator of wireless communication flow direction in the received message is decoded as either one or two bytes in length. In some aspects, means for decoding may include the hardware processor 204.

Some aspects of block 602 may perform one or more of the functions discussed with respect to blocks 902, 1202, 1502, 1802, and/or 2302.

In an aspect, the receiver 212 is configured to perform one or more of the functions discussed with respect to block 602. In an aspect, means for receiving may be the receiver 212 of Figure 2. In another aspect, the processor 204 may be configured to perform one or more of the functions discussed above with respect to block 602. In an aspect, means for receiving may include the processor 204. In block 604, a message is communicated with the access point based on the wireless communication flow direction indication. For example, if the indicated flow direction is for uplink traffic, block 604 may include transmitting a message to the first device. If the indicated flow direction is for downlink traffic, block 604 may include receiving a message from the first device.

In an aspect, the processor 204 is configured to perform one or more of the functions discussed with respect to block 604. In an aspect, means for communicating a message with the first device may include the processor 204. In some aspects, the first device is an access point.

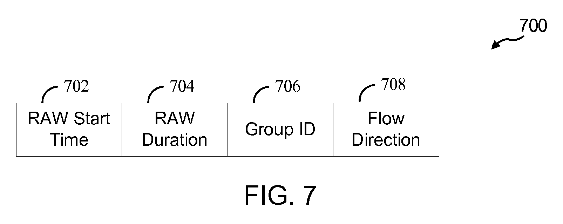

The message indicating a wireless communication flow direction, for example, the message generated in block 502 or the message received in block 602, may be composed in various ways. FIG. 7 shows one implementation of the message comprising an indicator identifying a wireless communication flow direction. The message 700, or a substantially similar message, may be transmitted from an AP to associated wireless stations as described above with regard to FIG. 5. The message 700, or a substantially similar message, may also be received in block 602 of process 600. The message 700 may be transmitted using any process and method suitable for transmissions from the AP to the station.

In the illustrative implementation, the message defines a restricted access window, a period of time that an access point declares as reserved for a selected group of wireless stations, such as one specified in the 802.11ah protocol. The message includes a RAW Start Time 702 indicating the start time of the restricted access window. The message also includes a RAW Duration 704 indicating the duration of the restricted access window. The message also includes a Group ID 706 listing the selected group of wireless stations allowed to send a packet to the access point during the restricted access window.

In addition, the message includes a field 708 for indicating a wireless communication flow direction. In an aspect, the field 708 may include one bit which can be set to a logic value of 0 or 1, wherein a logic value of 1 indicates that the wireless communication flow during the restricted access window is in an uplink direction, and a logic value of 0 indicates that wireless communication flow during the restricted access window is in a downlink direction. In another aspect, the logic values may be reversed. In another aspect, the field 708 may include more than one bit. In these aspects, the field 708 may indicate that the wireless communication flow during the restricted access window is in an uplink direction, a downlink direction, or is bidirectional. In an aspect, the field 708 may prioritize downlink data and uplink data. For example, the field 708 may indicate that downlink data is higher priority than uplink data. Alternatively, field 708 may indicate that uplink data is higher priority than downlink data.

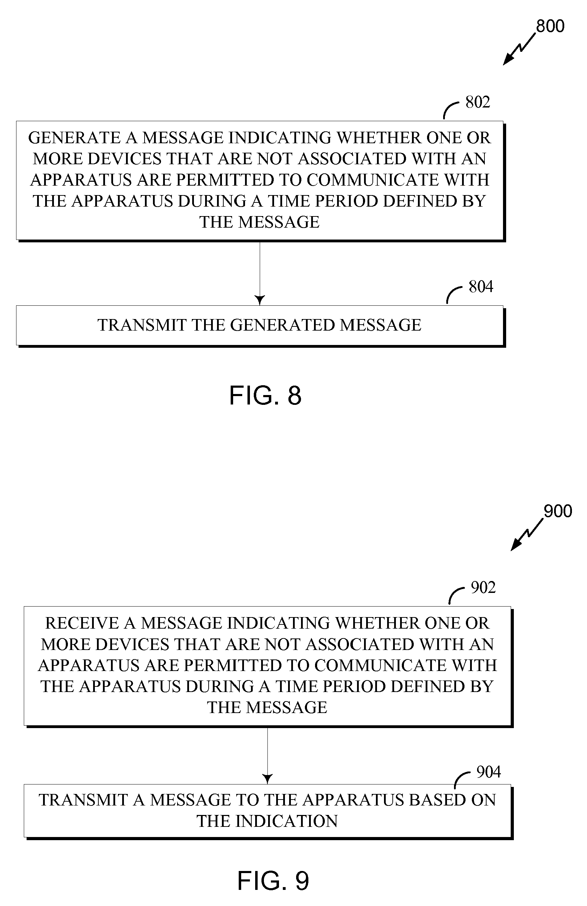

FIG. 8 is a flowchart of a method of wireless communication in accordance with one implementation. The method 800 may be performed by an apparatus for wireless communication, such as the access point (AP) 104 (shown in FIG. 1) or the wireless device 202 shown in FIG. 2. Method 800 may improve the ability of an access point to manage the type of communication it receives during certain time periods. For example, some access points may determine that unassociated stations should not communicate with it during a restricted access window. Other access points may determine that they will allow unassociated stations to communicate with them during certain time periods, for example, during certain restricted access windows. This improved ability for an access point to manage the traffic it receives during one or more time periods, such as one or more restricted access windows, may provide for more efficient operation of a wireless communication network.

At block 802, the method includes generating a message indicating whether one or more devices that are not associated with an apparatus are permitted to communicate with the apparatus during a time period defined by the message. In an aspect the message further indicates the period of time is declared as reserved for communication by an access point for a selected group of wireless stations, such as a group of stations specified in the 802.11ah protocol. For example, a BSSID may be included in the generated message to identify the group of stations in some aspects.

In an aspect, the message may indicate that the time period is to be used for association of stations only. In this aspects, only non-associated stations may communicate with the apparatus during the time period defined by the message. Alternatively, the message may indicate the time period can be used by both a group of associated stations as well as non-associated stations. In some aspects, the message includes at least two distinct indicators, a first indicator indicating whether non-associated stations may utilize the time period, and a second indicator indicating whether or which associated stations may utilize the time period.

In an aspect the message is generated as a restricted access window (RAW) message. In some aspects, the message is generated to indicate whether associated devices (such as specific devices) may also use the time period for communication with the apparatus. In these aspects, the specific devices may be identified in the message by, for example, unique device identifiers or network addresses. In some aspects, the message is generated to indicate whether a group of associated stations may also use the time period for communication with the apparatus. Some aspects of block 802 may perform one or more of the functions discussed with respect to blocks 502, 1102, 1402, 1702, and/or 2202.

In some aspects, the message may indicate devices not associated with the apparatus are permitted to communicate with the apparatus via a raw parameter set (RPS) element in a short beacon frame. The RPS element may indicate a RAW during which all STAs are allowed to access the medium or communicate with an access point. This may be indicated in some aspects via a RAW Group field in the RPS element that is all zeros. Such a RAW may be used for association of new STAs.

In an aspect, the processor 204 may be configured to perform one or more of the functions discussed with respect to block 802. In an aspect, means for generating may include the processor 204.

At block 804, the generated message is transmitted. In an aspect, the transmitter 210 may be configured to perform one or more of the functions discussed with respect to block 804. In an aspect, the message is transmitted to a station. In an aspect, means for transmitting may include the transmitter 210. In another aspect, the processor 204 may be configured to perform one or more of the functions discussed above with respect to block 804. In an aspect, means for transmitting the generated message may include the processor 204.

Some aspects of process 800 further include receiving a message from a non-associated device, such as a station, during the indicated time period, and transmitting a response to the message based on the message being received within the time period. The process may also include receiving a message from a non-associated device, such as a station, outside the time period. In response, a message may be transmitted essentially "nak-ing" or otherwise providing a negative indication to the transmitter of the message that the apparatus will not process the message because it was received outside the time period. In other aspects a message received outside the time period may simply be dropped or ignored by the device receiving the message. Receiving of the messages outside the time period may be performed by the receiver 212 or processor 204. Means for receiving may include the processor 204 and/or receiver 212. Means for dropping or ignoring may include the processor 204. Means for transmitting a response may include the processor 204 and/or the transmitter 210.

Some aspects of process 800 include sleeping during the time period if the generated message indicates that devices are not permitted to communicate with the apparatus during the time period. Means for sleeping during the time period may include the processor 204.

FIG. 9 is a flowchart of a method of wireless communication in accordance with one implementation. The method 900 may be performed by an apparatus for wireless communication, such as the station 106 (shown in FIG. 1) or the wireless device 202 shown in FIG. 2. In some aspects, method 900 may enable a station to interoperate on a wireless communication network with an access point performing process 800.

At block 902, the method includes receiving a message indicating whether one or more devices that are not associated with an apparatus are permitted to communicate with the apparatus during a time period defined by the message. In an aspect the message further indicates that the time period is reserved for a selected group of wireless stations to communicate. For example, the message may be a restricted access window (RAW) message, similar to the RAW message specified in the 802.11ah protocol Some aspects of block 902 may perform one or more of the functions discussed with respect to blocks 602, 1202, 1502, 1802, and/or 2302.

In an aspect, the receiver 212 is configured to perform one or more of the functions discussed with respect to block 902. In an aspect, means for receiving may include the receiver 212. In another aspect, the processor 204 may be configured to perform one or more of the functions discussed above with respect to block 902. In an aspect, means for receiving may include the processor 204.

Block 902 may further include decoding the received message to determine whether one or more devices that are not associated with the apparatus are permitted to communicate with the apparatus during the time period defined by the message. Block 902 may also include decoding the received message to determine the period of time that the access point declares as reserved for the selected group of wireless stations. Block 902 may also include decoding the received message as a restricted access window message. In some aspects, means for decoding includes the processor 204.

In block 904, a message is selectively transmitted to the apparatus based on the indication. In an aspect, an association message is transmitted to the apparatus if the indication indicates a first value and an association message is not transmitted to the apparatus if the indication indicates a second value. In an aspect, the transmitter 210 is configured to perform one or more of the functions discussed with respect to block 904. In an aspect, means for transmitting may include the transmitter 210. In another aspect, the processor 204 may be configured to perform one or more of the functions discussed above with respect to block 904. In an aspect, means for transmitting the generated message may include the processor 204.

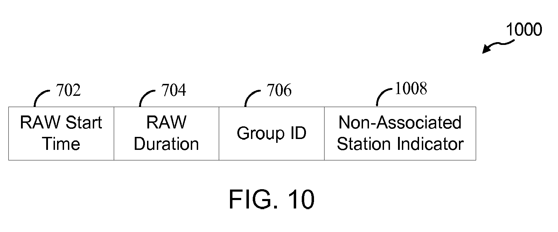

A message indicating whether one or more devices that are not associated with the apparatus are permitted to communicate with the apparatus during a time period, such as the message generated in block 802 above, or the message received in block 902 above, may be composed in various ways. FIG. 10 shows one implementation of the message indicating whether one or more devices that are not associated with the apparatus are permitted to communicate with the apparatus during a time period. The message 1000 may be transmitted from an AP to wireless stations as described above with regard to FIG. 8. The message 1000 may be transmitted using any process and method suitable for transmissions from the AP to the station.

In the illustrative implementation, the message defines a restricted access window, a period of time that an access point declares as reserved for a selected group of wireless stations, such as one specified in the 802.11ah protocol. The message includes a RAW Start Time 702 indicating the start time of the restricted access window. The message also includes a RAW Duration 704 indicating the duration of the restricted access window. The message also includes a Group ID 706 listing the selected group of wireless stations allowed to send a packet to the access point during the restricted access window.

In addition, the message includes a field 1008 for indicating whether one or more devices that are not associated with the apparatus are permitted to communicate with the apparatus during a time period defined by the RAW Start Time 702 and RAW Duration 704. The message also includes a Group ID 706 listing the selected group of wireless stations allowed to send a packet to the access point during the restricted access window. In an aspect, the field 1008 may include one bit which can be set to a logic value of 0 or 1, wherein a logic value of 1 indicates that one or more devices that are not associated with the apparatus are permitted to communicate with the apparatus during the time period, and a logic value of 0 indicates that such communication is not permitted during the time period. In an aspect, the logic values may be reversed. In another aspect, the field 1008 may include more than one bit. In these aspects, the field 1008 may indicate that the time period is allocated for association of non-associated stations only. Alternatively, such a field may indicate that the time period is allocated for a group of stations, but that non-associated stations may also communicate with the apparatus during the time period. In yet another alternative, the field may indicate that the time period is allocated for associated stations only.

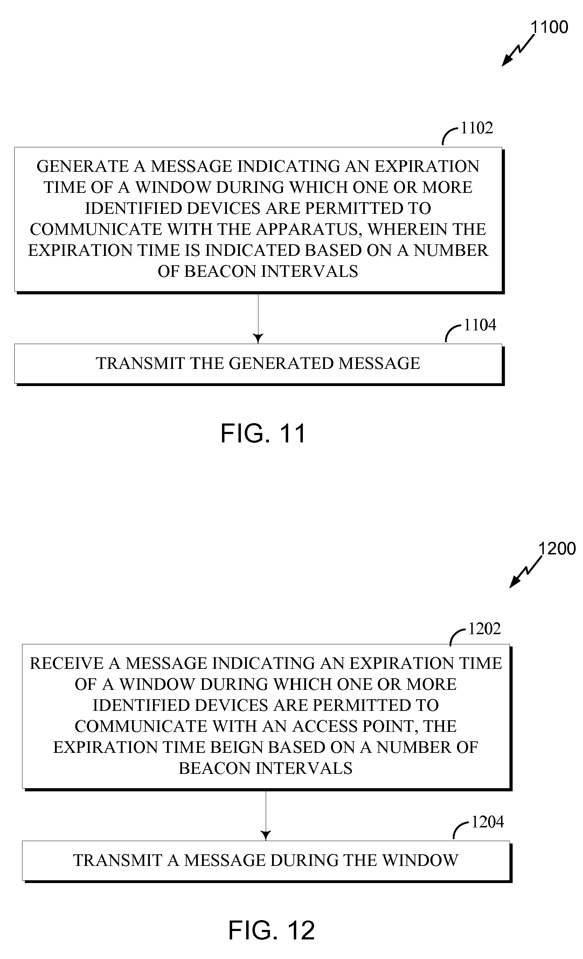

FIG.11 is a flowchart of a method of wireless communication in accordance with one implementation. The method 1100 may be performed by an apparatus for wireless communication, such as the access point (AP) 104 (shown in FIG. 1) or the wireless device 202 shown in FIG. 2. Method 1100 may provide for improved determination of an expiration time of a time period or window. In some current methods, the expiration time of a time period may be determined based parameters which may not be known to an access point. For example, some expiration times are based on the end of a beacon transmission. Since the end of a beacon signal may be difficult or impossible for some wireless nodes to predict, these nodes may be unable to determine the expiration time of a time period or a window. This may inhibit the nodes from entering a sleep state for a period of time equivalent to the uncertainty in the expiration of the time period or window. Method 1100 provides that an expiration of a time period is based on a number of beacon intervals. Since the length of a beacon interval is known, stations or access points on a wireless network utilizing process 1100 and 1200 below may improve their predictions of the end of a time period or window.

At block 1102, the method includes generating a message indicating an expiration time of a window during which one or more identified devices are permitted to communicate with the apparatus, wherein the expiration time is indicated based on a number of beacon intervals. In an aspect the message is generated as a restricted access window message, such as one specified in the 802.11ah protocol. In some aspects, the message is generated to indicate a group of associated stations may also use the time period for communication with the apparatus.

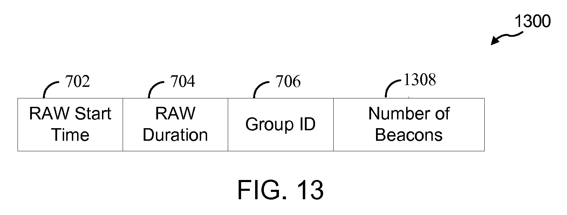

In some aspects, a particular value may be reserved to indicate the window does not expire. For example, in some aspects, the particular value reserved for this purpose is zero (0). In these aspects, if the number of beacon intervals is set to zero the message indicates the window does not expire. In some aspects, the message may be generated to substantially conform with the format of message 1300, discussed below with respect to FIG. 13.

In some aspects, the generated message may include a periodic operation parameters subfield. The periodic operation parameters subfield may be three octets in length in some aspects. In some aspects, the periodic operation parameters subfield comprises a periodic restricted access window (PRAW) periodicity, PRAW Validity, and PRAW Start Offset sub-subfields. The PRAW periodicity subfield indicates the period of current PRAW occurrence in a unit of short beacon interval, and is eight bits in some aspects. The PRAW Validity subfield indicates the number of periods that the PRAW repeats, and is of length 8 bits in some aspects. For example, the PRAW Validity subfield may indicate a duration of a PRAW based on a number of beacon intervals as discussed above. The PRAW Start Offset subfield indicates the offset value in time units (TU) from the end of a (Short) beacon frame that the first window of the PRAW appears from, and is of length 8 bits.

Some aspects of block 1102 may perform one or more of the functions discussed with respect to blocks 502, 1802, 1402, 1702, and/or 2202.

In an aspect, the processor 204 is configured to perform one or more of the functions discussed with respect to block 1102. In an aspect, means for generating the message may include the processor 204.

In block 1104, the generated message is transmitted. In an aspect, the message may include a number of beacon intervals field. In some of these aspects, a particular value of the number of beacon intervals field may be reserved to indicate that the window does not expire. In these aspects, transmitting a message with the number of beacon intervals field set to the reserved value indicates the window does not expire. In these aspects, a second message may be transmitted with the number of beacon intervals field set to a value other than the reserved value to indicate a window that will expire after the indicated number of beacon intervals.

In one aspect, the transmitter 210 is configured to perform one or more of the functions discussed with respect to block 1104. In another aspect, the processor 204 may be configured to perform one or more of the functions discussed above with respect to block 1104. In an aspect, means for transmitting the generated message may include the transmitter 210 and/or the processor 204.

The method 1100 may further include receiving a second message from one or more of the identified devices, and processing the message based on whether the message was received during the window and/or before expiration of the window. Means for receiving the second message may be performed by one or more of the processor 204 and/or receiver 212.

Some aspects of process 1100 further include generation and transmission of a subsequent message, also including an expiration time of the window. This subsequent message effectively redefines the expiration time of the window defined by any previously generated and transmitted messages. For example, in these aspects, if a previously transmitted message indicated the window did not expire, a subsequently generated and transmitted message may indicate the window does expire after a particular number of beacon intervals. The generation and transmission may be performed by one or more of the processor 204 and/or transmitter 210. Means for generating and means for transmitting may include one or more of the processor 204 and/or transmitter 210.

FIG. 12 is a flowchart of a method of wireless communication in accordance with one implementation. The method 1200 may be performed by an apparatus for wireless communication, such as the station 106 (shown in FIG. 1) or the wireless device 202 shown in FIG. 2. In one aspect, method 1200 may enable a station to interoperate with an access point performing process 1100.

At block 1202, the method includes receiving a message indicating an expiration time of a window during which one or more identified devices are permitted to communicate with an access point, the expiration time being based on a number of beacon intervals. Some aspects of block 1202 may perform one or more of the functions discussed with respect to blocks 602, 902, 1502, 1802, and/or 2302.

In an aspect, the receiver 212 is configured to perform one or more of the functions discussed with respect to block 1202. In an aspect, means for receiving the message indicating an expiration time may include the receiver 212. In another aspect, the processor 204 may be configured to perform one or more of the functions discussed above with respect to block 1202. In an aspect, means for receiving may include the processor 204.

In some aspects, block 1202 includes decoding the received message to determine the expiration time of the window. In some aspects, the decoding may be performed by the processor 204. In some aspects, means for decoding may include the processor 204.

In an aspect the received message further indicates a period of time that an access point declares as reserved for a selected group of wireless stations, such as one specified in the 802.11ah protocol. In an aspect, the received message is a restricted access window message. In some aspects, the received message may substantially conform to the format of the message 1300, discussed below. Some aspects include decoding the received message to determine the period of time that an access point declares as reserved for a selected group of wireless stations. In some aspects, means for decoding may include the processor 204. Some aspects of process 1200 include decoding the received message as a restricted access window message. Means for decoding may include the hardware processor 204.

In block 1204, a messaged is transmitted during the window. In some aspects, the transmission of the message during the window is based on the message received in block 1202. In an aspect, the transmitter 210 is configured to perform one or more of the functions discussed with respect to block 1204. In an aspect, means for transmitting a message during the window may include the transmitter 210. In another aspect, the processor 204 may be configured to perform one or more of the functions discussed above with respect to block 1204. In an aspect, means for transmitting a message during the window may include the processor 204.

In an aspect, the transmitted message may include a number of beacon intervals field. In some of these aspects, a particular value of the number of beacon intervals field may indicate that the window does not expire. In these aspects, receiving a message with the number of beacon intervals field set to the particular value indicates the window does not expire. In these aspects, a second message may be received with the number of beacon intervals field set to a value other than the particular value to indicate the window will expire after the indicated number of beacon intervals.

A message indicating an expiration time of a window, as discussed above with respect to FIGs. 11 and 12, may be composed in various ways. FIG. 13 shows one implementation of the message indicating an expiration time of a window. The message 1300 may be transmitted from an AP to associated wireless stations as described above with regard to FIG. 11. The message 1300 may be transmitted using any process and method suitable for transmissions from the AP to the station.

In the illustrative implementation, the message defines a restricted access window, a period of time that an access point declares as reserved for a selected group of wireless stations, such as one specified in the 802.11ah protocol. The message includes a RAW Start Time 702 indicating the start time of the restricted access window. The message also includes a RAW Duration 704 indicating the duration of the restricted access window. The message also includes a Group ID 706 listing the selected group of wireless stations allowed to send a packet to the access point during the restricted access window.

In addition, the message includes a field 1308 for indicating an expiration time of the restricted access window. In the illustrated aspect, the expiration time is indicated based on a number of beacons. As discussed above, a particular value of field 1308 may be reserved to indicate that the window does not expire. In these aspects, a first version of message 1300 may be sent with field 1308 set to the particular value, thus indicating that the window does not expire. Later, a second version of message 1300 may be transmitted with field 1308 set to a value other than the particular value. The second message indicates an expiration time of the window after the number of beacon intervals specified in field 1308.

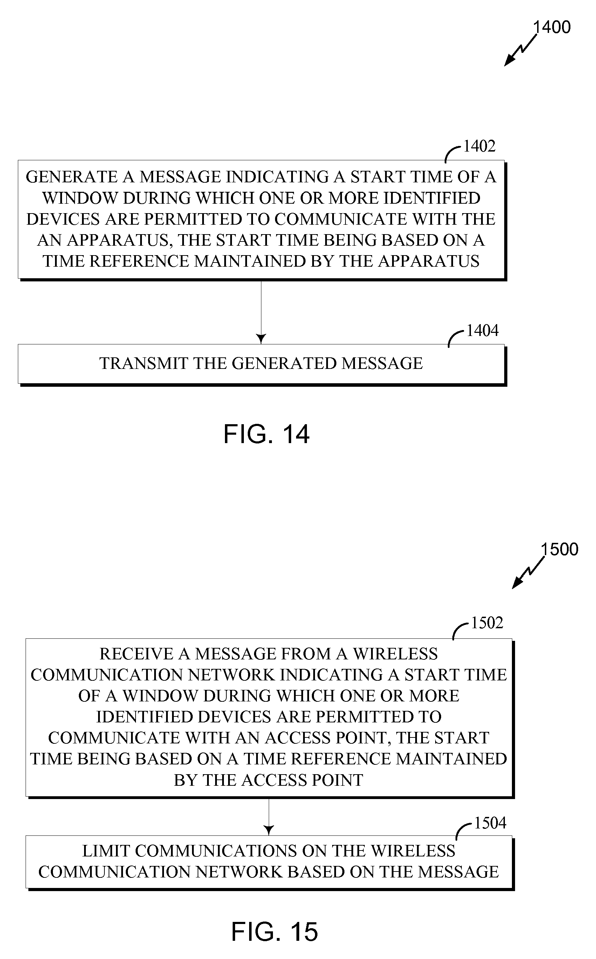

FIG.14 is a flowchart of a method of wireless communication in accordance with one implementation. The method 1400 may be performed by an apparatus for wireless communication, such as the access point (AP) 104 (shown in FIG. 1) or the wireless device 202 shown in FIG. 2. In some current methods, the start time of a time period may be determined based on parameters which may not be known to one or more devices on the wireless network. For example, some start times are based on the end of a beacon transmission. Since the end of a beacon signal may be difficult or impossible for some wireless nodes to predict, these nodes may be unable to determine the start time of a time period or a window. This may inhibit the nodes from entering a sleep state for a period of time equivalent to the uncertainty in the start of the time period or window. Method 1400 provides that the start of a time period is based on a time reference maintained by an apparatus. Since the apparatus maintains the time reference, and may communicate synchronization signals to other devices on a wireless network that are based on the time reference, the start of the time period can be easily determined. Because of this, stations or access points on a wireless network utilizing process 1400 and 1500 below may improve their predictions for the start of a time period or window.

At block 1402, the method includes generating a message indicating a start time of a window during which one or more identified devices are permitted to communicate with the apparatus, the start time being based on an absolute time reference maintained by the apparatus. In an aspect, the time reference is a target beacon transmit time (TBTT). In another aspect, the time reference is a timing synchronization function (TSF). In some aspects, the message is generated as a restricted access window (RAW) message. A restricted access window message indicates a start time and duration of the restricted access window.

In some aspects, block 1402 may perform one or more of the functions discussed with respect to blocks 502, 802, 1102, 1702 (discussed below), and/or 2202 (also discussed below).

In an aspect, the processor 204 may be configured to perform one or more of the functions discussed with respect to block 1402. In an aspect, means for generating the message indicating a start time of a window may include a processor 204.

In block 1404, the generated message is transmitted. In an aspect, the message is a target wake time information element (TWT IE). In an aspect, the transmitter 210 is configured to perform one or more of the functions discussed with respect to block 1404. In an aspect, means for transmitting the generated message may include the transmitter 210. In another aspect, the processor 204 may be configured to perform one or more of the functions discussed above with respect to block 1404. In an aspect, means for transmitting the generated message may include the processor 204.

FIG. 15 is a flowchart of a method of wireless communication in accordance with one implementation. The method 1500 may be performed by an apparatus for wireless communication, such as the station 106 (shown in FIG. 1) or the wireless device 202 shown in FIG. 2. In an aspect, method 1500 may enable a station to interoperate with an access point performing method 1400 above.

At block 1502, the method includes receiving a message indicating a start time of a window during which one or more identified devices are permitted to communicate with an access point, the start time being based on an absolute time reference maintained by the access point. In an aspect, the message is a target wake time information element (TWT IE). In an aspect, the time reference is a target beacon transmit time (TBTT). In an aspect, the time reference is a timing synchronization function (TSF).

In an aspect, the receiver 212 is configured to perform one or more of the functions discussed with respect to block 1502. In an aspect, means for receiving a message indicating a start time of a window may include the receiver 212. In another aspect, the processor 204 may be configured to perform one or more of the functions discussed above with respect to block 1502. In an aspect, means for receiving may include the processor 204.

Some aspects of block 1502 include decoding the received message to determine the start time of the window. In some aspects, the processor 204 may perform the decoding. In some aspects, means for decoding the received message includes the processor 204. In some aspects, the means for decoding is configured to decode the time reference as a target beacon transmit time (TBTT) or as a timing synchronization function (TSF). In some aspects, the means for decoding is configured to decode the received message as a restricted access window message.

Some aspects of block 1502 may perform one or more of the functions discussed with respect to blocks 602, 902, 1202, 1802 (discussed below), and/or 2302 (also discussed below).

In block 1504, communications on the wireless communication network are limited based on the message. In some aspects, a second message is received by process 1500. The second message is processed based on whether the second message is received during the window. The window may be at least partially defined by the start time indicated in the message received in block 1502. Some aspects of process 1500 include transmitting a beacon message indicating a second time reference derived from the time reference maintained by the apparatus.

In an aspect, the processor 204 is configured to perform one or more of the functions discussed with respect to block 1504. In an aspect, means for limiting communication on the wireless communication network may include the processor 204. In some aspects, the means for limiting may include a means for transmitting a beacon message indicating a second time reference derived from the time reference maintained by the apparatus. In some aspects, the means for transmitting may include the transmitter 210 and/or the processor 204. In some aspects, means for receiving a second message may include one or more of the receiver 212 or the hardware processor 204. In some aspects, mean for processing the second message based on whether the second message was received during the window may include the hardware processor 204.

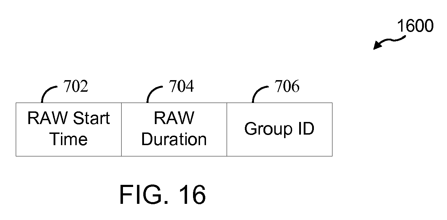

The message indicating the start time of a window may be composed in various ways. FIG. 16 shows one implementation of the indicating the start time of a window. The message 1600, or a message with substantially similar fields to the message 1600, may be transmitted from an AP to associated wireless stations as described above with regard to FIG. 14. The message 1600, or a message including substantially similar fields to the message 1600, may be received in block 1502 of process 1500, discussed above. The message 1600 may be transmitted using any process and method suitable for transmissions from the AP to the station.

In the illustrative implementation, the message defines a restricted access window, a period of time that an access point declares as reserved for a selected group of wireless stations, such as one specified in the 802.11ah protocol. The message includes a RAW Start Time 702 indicating the start time of the restricted access window. In some aspects, the RAW Start Time 702 may be eight (8) bits in length and indicate a duration, in time units (TU) from the end of a (short) beacon or (short) probe Response frame transmission that includes an EPS element to the start time of the restricted access window (RAW). The time unit for the RAW Start Time subfield 802 is two time units (TU).

In some aspects, the message also includes a RAW Duration 704 indicating the duration of the restricted access window. The message also includes a Group ID 706 listing the selected group of wireless stations allowed to send a packet to the access point during the restricted access window.

In one aspect of the method described above, the RAW Start Time 702 may be based on a time reference maintained by an apparatus, for example, an apparatus transmitting message 1600. As discussed above with respect to processes 1400 and 1500, in some aspects, the RAW start Time 702 may be based on a target beacon transmit time (TBTT). In another aspect, the RAW start Time 702 may be based on a timing synchronization function (TSF).

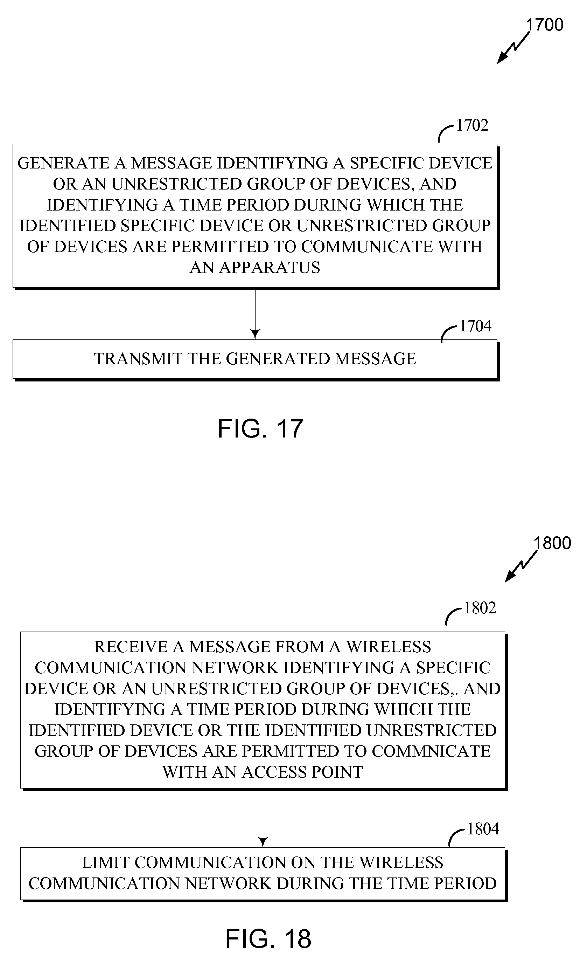

FIG.17 is a flowchart of a method of wireless communication in accordance with one implementation. The method 1700 may be performed by an apparatus for wireless communication, such as the access point (AP) 104 (shown in FIG. 1) or wireless device 202 of FIG. 2. The method 1700 may provide for improved association of one or more stations with a time period for transmission on the wireless network. For example, some current methods may not allow individual stations to be associated with a time period for transmission. Instead, these methods may provide for the association of a group of stations with a time period for transmission. By enabling a time period or window to be associated with one or more stations, improved control of communications on a wireless network may result, leading to improved efficiency and performance of the wireless network.

At block 1702, the method includes generating a message identifying a specific device or an unrestricted group of devices, and identifying a time period during which the identified specific device or unrestricted group of devices are permitted to communicate with an apparatus. In an aspect, the message identifies each member of the unrestricted group of devices. For example, the message may include a field or other indication that provides a device identifier for each device in the unrestricted group of devices. In an aspect, the message identifies two or more specific devices, and the time period identifies a time during which the two or more specific devices are permitted to communicate with the apparatus. For example, the message may identify greater than 64 different devices.

In an aspect, the message is a restricted access window message. The restricted access window message may include a group subfield that indicates AID's of stations allowed restricted access during the restricted access window period. In some aspects, the group subfield may include a page index, a starting AID for station's allowed access during the restricted access window period, and an ending AID for stations allowed access during the restricted access window period. In these aspects, any station with an AID between or including the starting AID and the ending AID, in accordance with the hierarchical addressing method of AID's, is allowed access during the restricted access window period. In this way, the number of stations that can be allowed access during the restricted access window period is unrestricted.

Some aspects of block 1702 may perform one or more of the functions discussed with respect to blocks 502, 802, 1102, 1402, and/or 2202 (discussed below).

In an aspect, the processor 204 may be configured to perform one or more of the functions discussed with respect to block 1702. In an aspect, means for generating a message identifying a specific device or an unrestricted group of devices may include the processor 204.

In block 1704, the generated message is transmitted. In some aspects, process 1700 further includes receiving a message from a source device during the time period identified by the generated and transmitted message. The received message is processed based on the message being from the source device and based on the received message being received within the time period identified by the generated and transmitted message. For example, because the message was received from the source device during the time period, the message may be processed fully if the generated message identified the source device. If the message requests resources of some kind from the receiving device, the resources may be allocated and a response sent to the source device if the source device was identified by the message generated in block 1702. If the generated message did not identify the source device of the received message, either directly via a device identifier, or indirectly by identifying a group of which the source device belongs, then a message received from the source device during the time period may not be processed in a regular fashion. For example, the message may be dropped or ignored without responding to the source device. In some aspects, a response may be generated and transmitted to the source device, but the response may indicate a negative acknowledgment, or otherwise communicate an error status because the message was received from the source device during the time period, but the source device was not granted permission to transmit a message to the device performing process 1700 during the time period.

In an aspect, one or more of the processor 204 and/or the transmitter 210 may be configured to perform one or more of the functions discussed with respect to block 1704. In an aspect, means for transmitting the message may include the transmitter 210 and/or the processor 204.

FIG. 18 is a flowchart of a method of wireless communication in accordance with one implementation. The method 1800 may be performed by an apparatus for wireless communication, such as the station 106 (shown in FIG. 1) or the wireless device 202 of FIG. 2. In an aspect, method 1800 may enable a station to interact with an access point performing process 1700.

At block 1802, the method includes receiving a message indicating a start time of a window during which one or more identified devices are permitted to communicate with an access point. In an aspect, the message may be decoded to identify two or more specific devices, and to identify a time period during which the two or more specific devices are permitted to communicate with the apparatus. For example, in one aspect the message may be decoded to identify more than sixty four devices that are permitted to communicate with the apparatus. In an aspect, the message is decoded as a restricted access window message.

Some aspects of block 1802 may include one or more of the functions discussed with respect to blocks 602, 902, 1202, 1502, and/or 2302 (discussed below).

In an aspect, one or more of the processor 204 and/or the receiver 212 may be configured to perform one or more of the functions discussed with respect to block 1802. In an aspect, means for receiving the message indicating a start time of a window may include the receiver 212. In another aspect, the processor 204 may be configured to perform one or more of the functions discussed above with respect to block 1802. In an aspect, means for receiving may include the processor 204. In an aspect, means for decoding the received message to identify the start time of a window may include the processor 204. Means for decoding the received message to identify a time period may also include the processor 204. In some aspects, the means for decoding the received message is configured to decode the message to identify two or more specific devices and discussed above. The means for decoding may also be configured to decode the time period to identify a time during which the two or more specific devices are permitted to communicate with the access point. In some aspects, the means for decoding is configured to decode the received message as a restricted access window message.

In block 1804, communications on the wireless communication network are limited based on the message. For example, in some aspects, if the received message is decoded to identify a device identifier of a device receiving the message, the receiving device may communicate with the apparatus during the time period identified by the message. For example, the device may transmit a message to the access point during the time period. Alternatively, if a receiving device is not identified by the message, that device may determine not to communicate with the access point during the identified time period.

Similarly, if the received message identifies an unrestricted group of devices of which the receiving device is not included, then the receiving device may not communicate with an apparatus that transmitted the message during the identified time period. Alternatively, if the receiving device was identified in the message, either specifically via a device identifier, or indirectly via identification of a group of devices of which the receiving device is a part, then the receiving device may communicate with an apparatus transmitting the received message during the identified time period.

In an aspect, the processor 204 may be configured to perform one or more of the functions discussed above with respect to block 1804. In an aspect, means for limiting communications on the wireless communication network may include the processor 204. In one aspect, the means for limiting is further configured to determine whether the apparatus is identified by the received message, and transmit a message to the access point during the time period if the apparatus is identified. In some aspects, the means for limiting is further configured to not transmit a message to the access point during the time period if the apparatus is not identified.

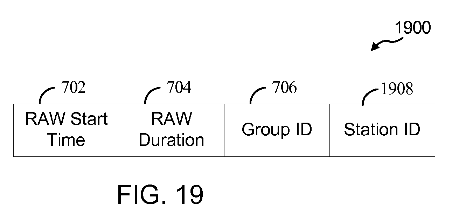

The message generating and transmitted in process 1700, and the message received and decoded in process 1800, may be composed in various ways. FIG. 19 shows one implementation of the message identifying a specific device or an unrestricted group of devices. The message 1900 may be transmitted from an AP to associated wireless stations as described above with regard to FIG. 17. For example, the message 1900, or a message substantially similar to the message 1900, may be generated in block 1702 and transmitted in block 1704. Similarly, the message 1900, or a message substantially similar to the message 1900, may be received and/or decoded in block 1802. The message 1900 may be transmitted using any process and method suitable for transmissions from the AP to the station.

In the illustrative implementation, the message defines a restricted access window, a period of time that an access point declares as reserved for a selected group of wireless stations, such as one specified in the 802.11ah protocol. The message includes a RAW Start Time 702 indicating the start time of the restricted access window. The message also includes a RAW Duration 704 indicating the duration of the restricted access window. The message also includes a Group ID 706 listing the selected group of wireless stations allowed to send a packet to the access point during the restricted access window.

In addition, the message includes a field 1908 for indicating a specific station. In the illustrated aspect, the specific station identified by field 1908 is permitted to communicate with an access point during a time period identified by the restricted access window.

In some aspects of message 1900, the message may include a group subfield that indicates AID's of stations allowed restricted access during the restricted access window period. In some aspects, the group subfield may include a page index, a starting AID for station's allowed access during the restricted access window period, and an ending AID for stations allowed access during the restricted access window period. In these aspects, any station with an AID between or including the starting AID and the ending AID, in accordance with the hierarchical addressing method of AID's, is allowed access during the restricted access window period. In this way, the number of stations that can be allowed access during the restricted access window period is unrestricted.

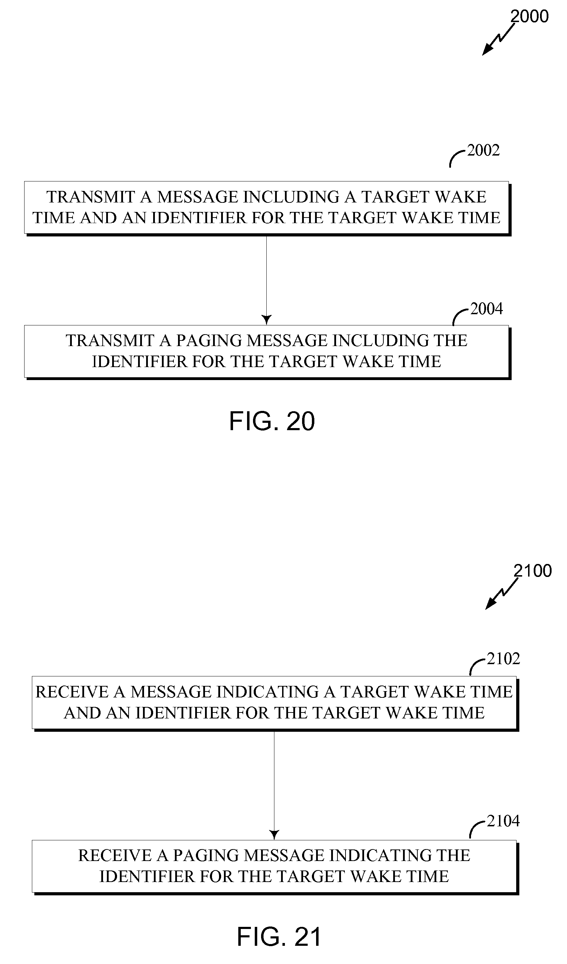

FIG. 20 is a flowchart of a method of wireless communication in accordance with one implementation. The method 2000 may be performed by an apparatus for wireless communication, such as the access point (AP) 104 (shown in FIG. 1). Method 2000 may provide for an improved ability for stations associated with multiple groups on a wireless network to enter a sleep state. For example, with previous methods, a station associated with multiple groups on a wireless network may remain awake and listening to network traffic during target wake times associated with each of the groups with which the station is associated.

At block 2002, the method includes transmitting a message including a target wake time and an identifier for the target wake time. In an aspect, the message is (or includes) a target wake time information element (TWT IE).

In an aspect, the transmitter 210 may be configured to perform one or more of the functions discussed with respect to block 2002. In an aspect, means for transmitting a message including a target wake time and an identifier for the target wake time is a transmitter 210. In another aspect, the processor 204 may be configured to perform one or more of the functions discussed above with respect to block 2002. In an aspect, means for transmitting a message including a target wake time and an identifier for the target wake time may include the processor 204.

In block 2004, a paging message is transmitted including the identifier for the target wake up time. In an aspect, the transmitter 210 may be configured to perform one or more of the functions discussed with respect to block 2004. In an aspect, means for transmitting a message including a target wake time and an identifier for the target wake time may include the transmitter 210. In an aspect, means for transmitting a paging message may include the transmitter 210. In another aspect, the processor 204 may be configured to perform one or more of the functions discussed above with respect to block 2004. In an aspect, means for transmitting the paging message may include the processor 204.

FIG. 21 is a flowchart of a method of wireless communication in accordance with one implementation. The method 2100 may be performed by an apparatus for wireless communication, such as the station 106 (shown in FIG. 1) or the wireless device 202 shown in FIG. 2. In an aspect, method 2100 may enable a station to interoperate with an access point performing method 2000 discussed above. At block 2102, the method includes receiving a message indicating a target wake time and an identifier for the target wake time. In an aspect, the message is (or includes) a target wake time information element (TWT IE). In an aspect, the receiver 212 may be configured to perform one or more of the functions discussed with respect to block 2102. In an aspect, means for receiving a message indicating a target wake time and an identifier for the target wake time may include the receiver 212. In another aspect, the processor 204 may be configured to perform one or more of the functions discussed above with respect to block 2102. In an aspect, means for receiving may include the processor 204.

In block 2104, a paging message is received indicating the identifier for the target wake time. In some aspects, block 2104 may include decoding the paging message to determine the identifier. In an aspect, the receiver 212 may be configured to perform one or more functions discussed with respect to block 2104. In an aspect, means for receiving a paging message indicating the identifier for the target wake time may include the receiver 212. In another aspect, the processor 204 may be configured to perform one or more of the functions discussed above with respect to block 2104. In an aspect, means for means for receiving a paging message indicating the identifier for the target wake time may include the processor 204.

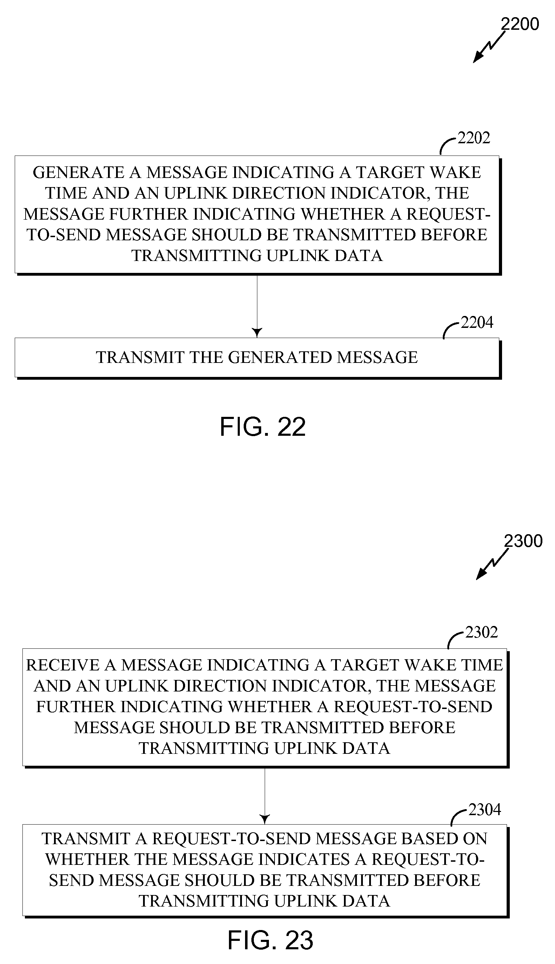

FIG.22 is a flowchart of a method of wireless communication in accordance with one implementation. The method 2200 may be performed by an apparatus for wireless communication, such as the access point (AP) 104 (shown in FIG. 1) or the wireless device 202 of FIG. 2. Method 2200 may provide an improved ability to manage uplink traffic transmitted by a first device to a second device. In an aspect, the first device is a station and the second device is an access point. In current methods, a target wake time message may be identified as providing an opportunity to transmit either uplink traffic or downlink traffic. If uplink traffic will be sent, the transmitter of the uplink traffic (the first device) will precede data transmission during a transmission interval identified by the target wake time with a request-to-send message. In response, a clear to send message may be transmitted by the second device to the first device. After receiving the clear-to-send message, the transmitter of the uplink traffic will initiate the data transfer. In some network environments, the second device may determine that a request-to-send / clear-to-send message communication exchange is unnecessary. In these network environments, the method 2200 provides an ability for the second device to indicate to the first device that no request-to-send message is needed before transmission of data is initiated. This may result in improved efficiency of operation of the wireless communication network.

At block 2202, the method includes generating a message indicating a target wake time and an uplink direction indicator, the message further indicating whether a request-to-send message should be transmitted before transmitting uplink data. Some aspects of block 2202 may perform one or more of the functions discussed with respect to blocks 502, 802, 1102, 1402, and/or 1702.

In an aspect, the processor 204 may be configured to perform one or more functions discussed with respect to block 2202. In an aspect, means for generating the message indicating a target wake time and an uplink direction indicator may include the processor 204. In block 2204, the generated message is transmitted. In an aspect, the transmitter 210 is configured to perform one or more of the functions discussed above with respect to block 2204. In an aspect, means for transmitting the generated message may include the transmitter 210. In another aspect, the processor 204 may be configured to perform one or more of the functions discussed above with respect to block 2204. In an aspect, means for transmitting the generated message may include the processor 204.

FIG. 23 is a flowchart of a method of wireless communication in accordance with one implementation. The method 2300 may be performed by an apparatus for wireless communication, such as the station 106 (shown in FIG. 1). In an aspect, method 2300 may enable a station to interoperate with an access point performing method 2200 discussed above. At block 2302, the method includes receiving a message indicating a target wake time and an uplink direction indicator, the message further indicating whether a request to send message should be transmitted before transmitting uplink data. Some aspects of block 2302 may perform one or more of the functions discussed with respect to blocks 602, 902, 1202, 1502, and/or 1802.

In an aspect, the receiver 212 may be configured to perform one or more of the functions discussed with respect to block 2302. In an aspect, means for receiving a message indicating a target wake time and an uplink direction indicator includes a receiver 212. In another aspect, the processor 204 may be configured to perform one or more of the functions discussed above with respect to block 2302. In an aspect, means for receiving may include the processor 204.

In block 2304, a request to send message is transmitted based on whether the message indicates a request-to-send message should be transmitted before transmitting uplink data. In an aspect, the transmitter 210 may be configured to perform one or more of the functions discussed above with respect to block 2304. In an aspect, means for transmitting a request to send message may include the transmitter 210. In another aspect, the processor 204 may be configured to perform one or more of the functions discussed above with respect to block 2304. In an aspect, means for transmitting the request to send message may include the processor 204.

In some of the foregoing implementations, a message from an access point specifies a restricted access window, a period of time that the access point declares as reserved for a selected group of wireless stations, such as one specified in the 802.11 ah protocol. Alternatively, the message may specify an access window during which access to the medium is granted to all wireless stations. In other words, the access point will accept a packet from all wireless stations during the access window. In one implementation, the message may further include a flag for indicating no access outside the access window, such as the flag 708 (see FIG. 7). This allows an access point to define active and inactive periods of time for the access point.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like. Further, a "channel width" as used herein may encompass or may also be referred to as a bandwidth in certain aspects.

As used herein, a phrase referring to "at least one of" a list of items refers to any combination of those items, including single members. As an example, "at least one of: a, b, or c" is intended to cover: a, b, c, a-b, a-c, b-c, and a-b-c.

The various operations of methods described above may be performed by any suitable means capable of performing the operations, such as various hardware and/or software component(s), circuits, and/or module(s). Generally, any operations illustrated in the Figures may be performed by corresponding functional means capable of performing the operations.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

In one or more aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Thus, in some aspects computer readable medium may comprise non-transitory computer readable medium (e.g., tangible media). In addition, in some aspects computer readable medium may comprise transitory computer readable medium (e.g., a signal). Combinations of the above should also be included within the scope of computer-readable media.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware or any combination thereof. If implemented in software, the functions may be stored as one or more instructions on a computer-readable medium. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray® disc where disks usually reproduce data magnetically, while discs reproduce data optically with lasers.

Thus, certain aspects may comprise a computer program product for performing the operations presented herein. For example, such a computer program product may comprise a computer readable medium having instructions stored (and/or encoded) thereon, the instructions being executable by one or more processors to perform the operations described herein. For certain aspects, the computer program product may include packaging material.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

While the foregoing is directed to aspects of the present disclosure, other and further aspects of the disclosure may be devised without departing from the basic scope thereof, and the scope thereof is determined by the claims that follow.

In the following, further examples are described to facilitate the understanding of the invention:
1. A method for wireless communication, comprising:
   generating, by an apparatus, a message identifying a specific device or a set of specific devices, and generating the message to identify a time period during which the identified specific device or identified set of specific devices are permitted to communicate with the apparatus; and
   transmitting, by the apparatus, the generated message.
2. The method of example 1, wherein generating the message further comprises generating a restricted access window (RAW) message.
3. The method of example 2, further comprising generating the restricted access window message to indicate a start time and a duration of the time period.
4. The method of example 2, wherein the RAW message comprises a raw parameter set (RPS) element.
5. The method of example 1, further comprising generating the message to comprise a list of the specific device or a list of the devices in the set.
6. The method of example 1, further comprising generating the message to comprise an indicator indicating the at least one specific device permitted to communicate with the apparatus during the time period.
7. The method of example 1, further comprising:
   receiving a message from the specific device; and
   generating a response to the specific device's message if the specific device's message is received during the time period.
8. An apparatus for wireless communication, comprising:
   a processing system configured to generate a message identifying a specific device or a set of specific devices and configured to generate the message to comprise an identifier of a time period during which the identified specific device or the identified set of specific devices are permitted to communicate with the apparatus; and
   a transmitter configured to transmit the generated message.
9. The apparatus of example 8, wherein generating the message further comprises generating a restricted access window (RAW) message.
10. The apparatus of example 9, wherein the RAW message comprises a raw parameter set (RPS) element.
11. The apparatus of example 9, wherein the processing system is further configured to generate the restricted access window message to indicate a start time and a duration of the time period.
12. The apparatus of example 8, wherein the processing system is further configured to generate the message to comprise a list of the specific device or a list of the set of specific devices permitted to communicate with the apparatus during the time period.
13. The apparatus of example 8, wherein the processing system is further configured to generate the message to comprise an identification of the one specific device or identifications of first and last specific devices of the set of specific devices permitted to communicate with the apparatus during the time period.
14. The apparatus of example 8, wherein the processing system is further configured to receive a message from the specific device, and wherein the processing system is further configured to generate a response to the specific device's message if the specific device's message is received during the time period.
15. A method for wireless communication, comprising:
   decoding, by a first apparatus, a message received from a wireless communications network to identify a specific device or a set of specific devices;
   decoding the message to identify a time period during which the identified specific device or identified set of specific devices; are permitted to communicate with a second apparatus; and
   limiting, by the first apparatus, communication with the second apparatus during the time period.
16. The method of example 15, further comprising decoding the received message as a restricted access window message.
17. The method of example 16, further comprising determining a start time and a duration of the time period based on the restricted access window message.
18. The method of example 15, further comprising decoding the restricted access window message to identify a list of the specific device or a list of the specific devices in the set.
19. The method of example 15, further comprising decoding the message to identify an identification of the specific device or an identification of a first and last specific device of the set of specific devices permitted to communicate with the second apparatus during the time period.
20. The method of example 15, wherein limiting, by the first apparatus, communication with the second apparatus during the time period further comprises:
   determining whether the first apparatus is identified by the received message based on the decoding;
   transmitting a message to the second apparatus during the time period if the first apparatus is identified; and
   not transmitting a message to the second apparatus during the time period if the first apparatus is not identified.
21. A first apparatus for wireless communication, comprising:
   a processing system configured to:
      decode a message received from a wireless communication network to identify a specific device or a set of specific devices,
      decode the message to identify a time period during which the identified specific device or the identified set of specific devices are permitted to communicate with a second apparatus, and
      limit communication with the second apparatus during the time period.
22. The apparatus of example 21, wherein the processing system is further configured to decode the received message as a restricted access window message.
23. The apparatus of example 22, wherein the processing system is further configured to determine a start time and a duration of the time period based on the restricted access window message.
24. The apparatus of example 22, wherein the processing system is further configured to decode the restricted access window message to identify a list of the specific device or a list of the devices in the set.
25. The apparatus of example 21, wherein the processing system is further configured to decode the message to identify an identification of the specific device or an identification of a first and last specific device of the set of specific devices permitted to communicate with the second apparatus during the time period.
26. The apparatus of example 21, wherein the processing system is configured to limit communication with the second apparatus during the time period by:
   determining whether the first apparatus is identified by the received message based on the decoding;
   wherein the first apparatus further comprises a transmitter configured to transmit a message to the second apparatus during the time period if the first apparatus is identified; and
   the transmitter is further configured to not transmit the message to the second apparatus during the time period if the first apparatus is not identified.

## Claims

1. A method for wireless communication, comprising:
generating, by an apparatus (202), a message identifying a specific device (104, 106) or a set of specific devices which are not associated with the apparatus (202), and generating the message to identify a time period during which the identified specific device (104, 106) or identified set of specific devices are permitted to communicate with the apparatus (202), wherein the generated message defines a restricted access window, RAW, which indicates the time period; and
transmitting, by the apparatus (202), the generated message.

2. The method of claim 1, further comprising generating the restricted access window message to indicate a start time.

3. The method of claim 1, wherein the RAW message comprises a raw parameter set, RPS, element.

4. The method of claim 1, further comprising generating the message to comprise a list of the specific device (104, 106) or a list of the devices in the set.

5. The method of claim 1, further comprising generating the message to comprise an indicator indicating the at least one specific device (104, 106) permitted to communicate with the apparatus (202) during the time period.

6. The method of claim 1, further comprising:
receiving a message from the specific device (104,106); and
generating a response to the specific device's (104, 106) message if the specific device's message is received during the time period.

7. An apparatus (202) for wireless communication, comprising:
a processing system configured to generate a message identifying a specific device (104, 106) or a set of specific devices which are not associated with the apparatus (202) and configured to generate the message to comprise an identifier of a time period during which the identified specific device (104,106) or the identified set of specific devices are permitted to communicate with the apparatus (202), wherein the generated message defines a restricted access window, RAW, which indicates the time period; and
a transmitter configured to transmit the generated message.

8. A method for wireless communication, comprising:
decoding, by a first apparatus, a message received from a second apparatus (202) in a wireless communications network to identify a specific device (104, 106) or a set of specific devices which are not associated with the second apparatus (202);
decoding the message to identify a time period during which the identified specific device or identified set of specific devices are permitted to communicate with the second apparatus (202), wherein the message defines a restricted access window, RAW, which indicates the time period; and
limiting, by the first apparatus, communication with the second apparatus (202) during the time period.

9. The method of claim 8, further comprising determining a start time based on the restricted access window message.

10. The method of claim 8, further comprising decoding the restricted access window message to identify a list of the specific device (104, 106) or a list of the specific devices in the set.

11. The method of claim 8, further comprising decoding the message to identify an identification of the specific device or an identification of a first and last specific device of the set of specific devices permitted to communicate with the second apparatus during the time period.

12. The method of claim 8, wherein limiting, by the first apparatus, communication with the second apparatus (202) during the time period further comprises:
determining whether the first apparatus is identified by the received message based on the decoding;
transmitting a message to the second apparatus (202) during the time period if the first apparatus is identified; and
not transmitting a message to the second apparatus (202) during the time period if the first apparatus is not identified.

13. A first apparatus for wireless communication, comprising:
a processing system configured to:
decode a message received from a second apparatus (202) in a wireless communication network to identify a specific device (104, 106) or a set of specific devices which are not associated with the second apparatus (202),
decode the message to identify a time period during which the identified specific device (104,106) or the identified set of specific devices are permitted to communicate with the second apparatus (202), wherein the message defines a restricted access window, RAW, which indicates the time period, and
limit communication with the second apparatus (202) during the time period.

14. The apparatus of claim 13, wherein the processing system is further configured to determine a start time based on the restricted access window message.

15. A computer program comprising program instructions which are computer-executable to implement all steps of the method of one of claims 1 to 6 or 8 to 12.

## Patentansprüche

1. Verfahren zur drahtlosen Übertragung, umfassend:
Erzeugen, durch eine Vorrichtung (202), einer Nachricht, welche ein spezifisches Gerät (104,106) oder eine Menge von spezifischen Geräten identifiziert, welche der Vorrichtung (202) nicht zugeordnet sind, und Erzeugen der Nachricht, um eine Zeitspanne zu identifizieren, während welcher das identifizierte spezifische Gerät (104,106), oder die identifizierte Menge von spezifischen Geräten zugelassen sind, mit der Vorrichtung (202) zu kommunizieren, wobei die erzeugte Nachricht ein beschränktes Zugangs-Fenster, RAW definiert, welches die Zeitspanne anzeigt; und
Übertragen der erzeugten Nachricht durch die Vorrichtung (202).

2. Verfahren gemäß Anspruch 1, weiterhin umfassend Erzeugen der beschränkten Zugangs-Fenster-Nachricht, um eine Anfangszeit anzuzeigen.

3. Verfahren gemäß Anspruch 1, wobei die RAW-Nachricht ein RAW ParameterSatz, RPS, -Element umfasst.

4. Verfahren gemäß Anspruch 1, weiterhin umfassend, Erzeugen der Nachricht, um eine Liste des spezifischen Geräts (104,106) oder eine Liste der Geräte in der Menge zu umfassen.

5. Verfahren gemäß Anspruch 1, weiterhin umfassend Erzeugen der Nachricht, um einen Indikator zu umfassen, welcher das wenigstens eine spezifische Gerät (104,106), welches zugelassen ist, während der Zeitspanne mit der Vorrichtung (202) zu kommunizieren, anzeigt.

6. Verfahren gemäß Anspruch 1, weiterhin umfassend:
Empfangen einer Nachricht von dem spezifischen Gerät (104,106); und
Erzeugen einer Antwort auf die Nachricht des spezifischen Geräts (104,106), wenn die Nachricht des spezifischen Geräts während der Zeitspanne empfangen wurde.

7. Vorrichtung (202) zur drahtlosen Kommunikation, umfassend:
ein Prozesssystem, welches dazu eingerichtet ist, eine Nachricht zu erzeugen, welche ein spezifisches Gerät (104,106) oder eine Menge von spezifischen Geräten identifiziert, welche der Vorrichtung (202) nicht zugeordnet sind, und dazu eingerichtet ist zum Erzeugen der Nachricht, um einen Identifikator einer Zeitspanne zu umfassen, während welcher das identifizierte spezifische Gerät (104,106), oder die identifizierte Menge von spezifischen Geräten zugelassen sind, mit der Vorrichtung (202) zu kommunizieren, wobei die erzeugte Nachricht ein beschränktes Zugangs-Fenster, RAW definiert, welches die Zeitspanne anzeigt; und
einen Sender, der dazu eingerichtet ist, die erzeugte Nachricht zu übertragen.

8. Verfahren zur drahtlosen Kommunikation, umfassend:
Dekodieren, durch eine erste Vorrichtung, einer Nachricht, welche von einer zweiten Vorrichtung (202) in einem drahtlosen Kommunikationssystem empfangen wurde, um ein spezifisches Gerät (104, 106) oder eine Menge von spezifischen Geräten zu identifizieren, welche nicht der zweiten Vorrichtung (202) zugeordnet sind;
Dekodieren der Nachricht, um eine Zeitspanne zu identifizieren, während welcher das identifizierte spezifische Gerät oder die identifizierte Menge von spezifischen Geräten zugelassen sind, mit der zweiten Vorrichtung (202) zu kommunizieren, wobei die erzeugte Nachricht ein beschränktes Zugangs-Fenster, RAW definiert, welches die Zeitspanne anzeigt;
Limitieren, durch die erste Vorrichtung, der Kommunikation mit der zweiten Vorrichtung (202) während dieser Zeitspanne.

9. Verfahren gemäß Anspruch 8, weiterhin umfassend Bestimmen einer Anfangszeit basierend auf der beschränkten Zugangs-Fenster-Nachricht.

10. Verfahren gemäß Anspruch 8, weiterhin umfassend Dekodieren der beschränkten Zugangs-Fenster-Nachricht, um eine Liste des spezifischen Geräts (104, 106) oder eine Liste der spezifischen Geräte in der Menge zu identifizieren.

11. Verfahren gemäß Anspruch 8, weiterhin umfassend Dekodieren der Nachricht, um eine Identifikation des spezifischen Gerätes oder eine Identifikation eines ersten und eines letzten spezifischen Geräts der Menge von spezifischen Geräten zu identifizieren, welche zugelassen sind, während der Zeitspanne mit der Vorrichtung zu kommunizieren.

12. Verfahren gemäß Anspruch 8, wobei das Limitieren, durch die erste Vorrichtung, einer Kommunikation mit der zweiten Vorrichtung (202) während dieser Zeitspanne, weiterhin umfasst:
Bestimmen, ob die erste Vorrichtung identifiziert wurde durch die empfangene Nachricht basierend auf dem Dekodieren;
Übertragen der Nachricht an die zweite Vorrichtung (202) während der Zeitspanne, wenn die erste Vorrichtung identifiziert wurde; und
Nicht-übertragen einer Nachricht an das zweite Gerät (202) während der Zeitspanne, wenn die erste Vorrichtung nicht identifiziert wurde.

13. Erste Vorrichtung zur drahtlosen Kommunikation, umfassend:
ein Prozesssystem, das eingerichtet ist zum:
Dekodieren einer von einer zweiten Vorrichtung (202) empfangenen Nachricht in einem drahtlosen Kommunikationsnetzwerk, um ein spezifisches Gerät (104,106) oder eine Menge von spezifischen Geräten zu identifizieren, welche der Vorrichtung (202) nicht zugeordnet sind,
Dekodieren der Nachricht, um eine Zeitspanne zu identifizieren, während welcher das identifizierte spezifische Gerät (104,106) oder die identifizierte Menge von spezifischen Geräten zugelassen sind, mit der zweiten Vorrichtung (202) zu kommunizieren, wobei die Nachricht ein beschränktes Zugangs-Fenster, RAW definiert, welches die Zeitspanne anzeigt; und
Limitieren der Kommunikation mit der zweiten Vorrichtung während dieser Zeitspanne.

14. Vorrichtung gemäß Anspruch 13, wobei das Prozesssystem weiterhin dazu eingerichtet ist, eine Anfangszeit zu bestimmen basierend auf der beschränkten Zugangs-Fenster-Nachricht.

15. Computerprogramm umfassend Programmanweisungen, welche Computerausführbar sind, um alle Schritte des Verfahrens eines der Ansprüche 1 bis 6 oder 8 bis 12 zu implementieren.

## Revendications

1. Procédé pour communication sans fil, comprenant :
la génération, par un appareil (202), d'un message identifiant un dispositif spécifique (104, 106) ou un jeu de dispositifs spécifiques qui ne sont pas associés à l'appareil (202), et la génération du message pour identifier une période durant laquelle le dispositif spécifique identifié (104, 106) ou jeu identifié de dispositifs spécifiques sont permis de communiquer avec l'appareil (202), dans lequel le message généré définit une fenêtre d'accès limité, RAW, qui indique la période ; et
la transmission, par l'appareil (202), du message généré.

2. Procédé selon la revendication 1, comprenant en outre la génération du message de fenêtre d'accès limité pour indiquer un temps de commencement.

3. Procédé selon la revendication 1, dans lequel le message RAW comprend un élément de jeu de paramètres bruts, RPS.

4. Procédé selon la revendication 1, comprenant en outre la génération du message pour comprendre une liste du dispositif spécifique (104, 106) ou une liste des dispositifs dans le jeu.

5. Procédé selon la revendication 1, comprenant en outre la génération du message pour comprendre un indicateur indiquant l'au moins un dispositif spécifique (104, 106) permis de communiquer avec l'appareil (202) durant la période.

6. Procédé selon la revendication 1, comprenant en outre :
la réception d'un message à partir du dispositif spécifique (104, 106) ; et
la génération d'une réponse au message du dispositif spécifique (104, 106) si le message du dispositif spécifique est reçu durant la période.

7. Appareil (202) pour communication sans fil, comprenant :
un système de traitement configuré pour générer un message identifiant un dispositif spécifique (104, 106) ou un jeu de dispositifs spécifiques qui ne sont pas associés à l'appareil (202) et configuré pour générer le message pour comprendre un identifiant d'une période durant laquelle le dispositif spécifique identifié (104, 106) ou le jeu identifié de dispositifs spécifiques sont permis de communiquer avec l'appareil (202), dans lequel le message généré définit une fenêtre d'accès limité, RAW, qui indique la période ; et un transmetteur configuré pour transmettre le message généré.

8. Procédé pour communication sans fil, comprenant :
le décodage, par un premier appareil, d'un message reçu à partir d'un second appareil (202) dans un réseau de communication sans fil pour identifier un dispositif spécifique (104, 106) ou un jeu de dispositifs spécifiques qui ne sont pas associés au second appareil (202) ;
le décodage du message pour identifier une période durant laquelle le dispositif spécifique identifié ou jeu identifié de dispositifs spécifiques sont permis de communiquer avec le second appareil (202), dans lequel le message définit une fenêtre d'accès limité, RAW, qui indique la période ; et
la limitation, par le premier appareil, de la communication avec le second appareil (202) durant la période.

9. Procédé selon la revendication 8, comprenant en outre la détermination d'un temps de commencement en fonction du message de fenêtre d'accès limité.

10. Procédé selon la revendication 8, comprenant en outre le décodage du message de fenêtre d'accès limité pour identifier une liste du dispositif spécifique (104, 106) ou une liste des dispositifs spécifiques dans le jeu.

11. Procédé selon la revendication 8, comprenant en outre le décodage du message pour identifier une identification du dispositif spécifique ou une identification d'un premier et dernier dispositif spécifique du jeu de dispositifs spécifiques permis de communiquer avec le second appareil durant la période.

12. Procédé selon la revendication 8, dans lequel la limitation, par le premier appareil, de la communication avec le second appareil (202) durant la période comprend en outre :
la détermination que le premier appareil est identifié ou non par l'intermédiaire du message reçu en fonction du décodage ;
la transmission d'un message au second appareil (202) durant la période si le premier appareil est identifié ; et la non-transmission d'un message au second appareil (202) durant la période si le premier appareil n'est pas identifié.

13. Premier appareil pour communication sans fil, comprenant :
un système de traitement configuré pour :
décoder un message reçu à partir d'un second appareil (202) dans un réseau de communication sans fil pour identifier un dispositif spécifique (104, 106) ou un jeu de dispositifs spécifiques qui ne sont pas associés au second appareil (202),
décoder le message pour identifier une période durant laquelle le dispositif spécifique identifié (104, 106) ou le jeu identifié de dispositifs spécifiques sont permis de communiquer avec le second appareil (202), dans lequel le message définit une fenêtre d'accès limité, RAW, qui indique la période, et
limiter une communication avec le second appareil (202) durant la période.

14. Appareil selon la revendication 13, dans lequel le système de traitement est en outre configuré pour déterminer un temps de commencement en fonction du message de fenêtre d'accès limité.

15. Programme d'ordinateur comprenant des instructions de programme qui sont exécutables par ordinateur pour implémenter toutes les étapes du procédé d'une des revendications 1 à 6 ou 8 à 12.
